# EUROPEAN PATENT APPLICATION

(11) **EP 3 441 931 A1**
(43) Date of publication of application: **13.02.2019**
(21) Application number: 17778867.6
(22) Date of filing: 17.02.2017
(51) Int. Cl.: G06Q 40/08, G06Q 30/02

(54) **FUNDED PENSION PROCESSING DEVICE, FUNDED PENSION PROCESSING METHOD, FUNDED PENSION PROCESSING SYSTEM, AND COMPUTER PROGRAM THEREOF**

(30) Priority: 08.04.2016 JP 2016078034
(71) Applicant: Takasaki, Masahiro, Tokyo 102-0071 (JP)
(72) Inventor: Takasaki Yoshikazu, Tokyo 102-0071 (JP)
(74) Representative: Alton, Andrew
(86) International application number: PCT/JP2017/005804
(87) International publication number: WO 2017/175488

(57) **Abstract**

[Problem] To provide a technology by which contributions to one's own pension can be made through product purchases and other consumer activities, thereby allowing funding of pensions while avoiding a decline in consumer activity. [Solution] Provided is a funded pension processing device 1, which is for providing a funded pension service in which in accordance with a product purchase by a user, a portion of the payment for the product is reserved as an individual pension for the user. The device acquires payment information computed in accordance with a purchase of a product by a user and deduction information set by the storefront selling the product to support the user, and, on the basis thereof, computes a sales amount for the storefront and a funded pension amount for the user. In addition, the device registers, in a funded pension information database 21, funded pension information relating to the computed funded pension amount in association with user identification information identifying the user who purchased the product.

## Description

### TECHNICAL FIELD

The present invention relates to a technique to reserve a part of a settlement amount for a product, according to a product purchase by a purchaser of the product, as an individual pension for the purchaser.

Also, the present application claims the benefit of priority of Japanese Patent Application No. 78034, filed on April 8, 2016, the content of which is incorporated herein by reference.

### BACKGROUND ART

Pension plans include: a funding method in which money paid earlier at actively working age is reserved and received after retirement; and a pay-as-you-go method in which money paid by currently actively working people is given to the elderly at the present time. In Japan, the pay-as-you-go public pension plan is currently implemented to realize intergenerational dependent care. There are countries where all the people are obliged to join such a public pension plan, and countries where there is no such obligation. In either case, the public pension holds a prominent position as a source of income after retirement.

However, sole dependence on the pay-as-you-go public pension plan might lead to a decrease in pension amount to be received after retirement when a possible imbalance of population increases the number of recipients. In fact, many developed countries have seen the end of the period of rapid growth and are now facing a budget deficit due to the falling birthrate and the like, making it very difficult to maintain the pay-as-you-go public pension plan.

Therefore, a method for gradually switching from the pay-as-you-go method to the funding method is considered to be required. However, young people with low income or low-income earners cannot afford to reserve their pensions and have difficulty in switching from the pay-as-you-go method to the funding method at once. Moreover, even if the pension plan could be switched to the funding method, the current increasing poverty and polarization have resulted in increase in low-income earners who cannot afford to reserve their pensions.

Moreover, there are few elderly people who live only on savings for after retirement or their funded individual pensions, leading to a need for the maintained public pension plan and stable operation thereof.

Furthermore, there is also a method in which a person who makes a purchase pays a tax at a flat tax rate set by the country (consumption tax) and the tax collected through consumption is reserved as a pension. However, an increase in people saving for their life after retirement by cutting down on shopping results in sluggish consumption and less tax revenue that can be collected. This also leads to a concern that the economic growth is further decelerated.

Such a situation is apparent from the fact that Patent Document 1 proposes, for example, a system for predicting public pension financing and stochastically analyzing a risk in consideration of a situation where burden on the actively working generations inevitably increases as the population ages and fewer babies are born.

With a rapid growth in the number of young people concerned about their lives after retirement, there is a demand for a new pension plan for allowing even low-income earners to reserve the fund for their living expenses after retirement without great efforts while precluding any burden on their daily life. However, there has not been proposed any such desirable pension plan so far to the knowledge of the applicant.

Meanwhile, daily foods having expiration dates such as bread, boxed lunch, prepared food, salad, unbaked cake, milk, dairy, livestock products, tofu, and fermented soybeans as well as fresh food required to be fresh (new) such as fruits and vegetables, fresh fish, and dressed meat are sold at stores such as supermarkets and convenience stores. Such products are disposed of when they expire or go bad. However, since such foods are prohibited from being disposed of as general waste, the stores commission the disposal to specialized service providers by paying the cost.

However, when such disposal is frequently required, not only sales at a store are reduced but also the cost for disposal is increased, which could put pressure on business operation.

Therefore, the store is trying to increase sales even slightly by selling close-to-date products at reduced prices by attaching discount stickers (price down stickers) thereto or by repricing, so that there may be no leftover goods.

Moreover, besides food, products that are slightly damaged, unevenly colored or fading in color, or irregular in size are referred to as so-called imperfect products, clearance goods, slightly imperfect goods or outlet products, which are sold at reduced price lower than the normal price, as in the case of food and the like. Moreover, in service business, again, services and the like are provided at reduced price in the off-season or during hours with less customers.

However, when such selling at reduced price becomes routine, consumers refrain from purchasing products at normal price unless they really want those products, and try to make a purchase after waiting for the price to go down. It is best for the store when all the products are sold at suggested prices. However, the store has no choice but to sell the products at reduced price at the risk of reduction in profits that should originally be gained by selling at the suggested prices, considering the cost for disposal when the products are left over, labor cost required depending on working hours, and the like.

Here, if such products with reduced price are purchased by low-income earners or the like concerned about their lives in the future, it may be of some help for the lives of low-income earners, and the store could also make a social contribution and thus enhance a company's value.

However, there has not been proposed any mechanism so far to the knowledge of the applicant to allow products with reduced price to be efficiently purchased by low-income earners or the like.

Moreover, Patent Document 2 describes that, when a consumer purchases a product or a service from its dealer, the dealer gives an amount preset from a purchase amount to the consumer as a discount and this amount is saved in the consumer's account.

Furthermore, Patent Documents 3 to 6 describe that, when a consumer purchases a product or a service from its dealer, points given to the consumer according to a purchase amount by the dealer are reserved as a pension.

### PRIOR ART DOCUMENTS

### PATENT DOCUMENTS

Patent Document 1: Japanese Patent Application Publication No. 2008-257310
Patent Document 2: Japanese Patent Application Publication No. Hei 7-56992
Patent Document 3: Japanese Patent Application Publication No. 2002-366767
Patent Document 4: Japanese Patent Application Publication No. 2007-157098
Patent Document 5: Japanese Patent Application Publication No. 2010-079822
Patent Document 6: Japanese Patent Application Publication No. 2010-205256

### SUMMARY OF THE INVENTION

### PROBLEM TO BE SOLVED BY THE INVENTION

The present invention has been made in consideration of the circumstances described above, and it is an object of the present invention to provide a technique that can eliminate concerns about the life after retirement while avoiding low consumer spending and also expect the store to efficiently and effectively make a social contribution by reserving the pension effortlessly through consumption such as purchase of products.

More specifically, the present invention provides a mechanism to enable a specific person (for example, a person with a low income) to eliminate concerns about his/her life after retirement while stimulating his/her willingness to buy and thus avoiding low consumer spending, by subtracting a predetermined amount set by a store, when a product is purchased by the specific person, from the price of the product and automatically reserving the predetermined amount as an individual pension. Moreover, the present invention provides a mechanism to enhance a company's value through social contribution by efficiently and effectively spending the amount subtracted by the store to support the specific person.

### MEANS FOR SOLVING THE PROBLEM

In order to achieve the above object, the inventor of the present application has created the following invention, considering that it may be useful to have a method in which a deduction amount based on a discount rate or price reduction set by a store, depending on an amount spent or a product, may be reserved as an individual pension.

More specifically, a funded pension processing device of the present invention is a device for providing a funded pension service to reserve, according to a purchase of a product by a user, a part of a settlement amount for the product as an individual pension for the user. The funded pension processing device basically includes at least: funded pension information storage means for storing funded pension information on a funded pension amount reserved according to the purchase of the product for each user; settlement amount processing means for calculating a sales amount of the store and a funded pension amount for the user, based on settlement amount information calculated according to the purchase of the product and deduction information set by the store selling the product to support the user; and funded pension registration means for registering the funded pension information on the funded pension amount calculated by the settlement amount processing means in the funded pension information storage means in association with the user identification information for identifying the user who has purchased the product.

The funded pension processing device of the present invention further includes: user information storage means for storing user identification information for identifying a user to whom the funded pension service is applicable; and application-allowed person determination means for referring to the user information storage means based on the user identification information to determine whether or not the user associated with the purchase of the product is an application-allowed person for the funded pension service. The settlement amount processing means calculates the sales amount and the funded pension amount upon receipt of information from the application-allowed person determination means, indicating that the user is the application-allowed person for the funded pension service .

The funded pension processing device of the present invention may further include: user information storage means for storing user identification information for identifying a user to whom the funded pension service is applicable and detailed personal information for each user; application information storage means for storing information on an application allowance condition for the funded pension service set by the store; application-allowed person determination means for referring to the application information storage means to extract information on the application allowance condition for the funded pension service, and then referring to the user information storage means to determine whether or not the user associated with the purchase of the product is an application-allowed person who satisfies the application allowance condition for the funded pension service. The settlement amount processing means may calculate the sales amount and the funded pension amount upon receipt of information from the application-allowed person determination means, indicating that the user is the application-allowed person who satisfies the application allowance condition for the funded pension service.

The funded pension processing device of the present invention may be further configured to be able to communicate through a network with a human resources information management device having human resources information storage means storing human resources information of the user as a laborer. The funded pension processing device of the present invention may further includes: inquiry request transmission means for transmitting the application allowance condition for the funded pension service, together with the user identification information, to the human resources information management device, to make an inquiry about whether or not the user is the application-allowed person who satisfies the application allowance condition for the funded pension service in light of the human resources information; response information reception means for receiving response information to the inquiry request from the human resources information management device. The application-allowed person determination means may determine whether or not the user associated with the purchase of the product is the application-allowed person who satisfies the application allowance condition for the funded pension service, based on the response information received by the response information reception means.

To be more specific, a funded pension processing device of the present invention is a device for providing a funded pension service in which, according to a purchase of a product by a user, the user reserves a part of a settlement amount for the product through a store as an individual pension for the user, the device being configured to be able to communicate through a network with a human resources information management device having human resources information storage means storing human resources information of the user as a laborer. The funded pension processing device includes at least: funded pension information storage means for storing funded pension information on a funded pension amount reserved according to the purchase of the product for each user; user information storage means for storing user identification information for identifying a user to whom the funded pension service is applicable and detailed personal information for each user; application information storage means for storing information on an application allowance condition for the funded pension service set by the store; application-allowed person determination means for referring to the application information storage means to extract information on the application allowance condition for the funded pension service based on store identification information specified in response to the purchase of the product by the user, and then referring to the user information storage means to determine whether or not the user based on the user identification information specified in response to the purchase of the product by the user is an application-allowed person who satisfies the extracted application allowance condition for the funded pension service; inquiry request transmission means for transmitting the application allowance condition for the funded pension service, together with the user identification information, to the human resources information management device, and also transmitting an inquiry request to make an inquiry about whether or not the user is the application-allowed person who satisfies the application allowance condition for the funded pension service in light of the human resources information; response information reception means for receiving response information to the inquiry request from the human resources information management device; settlement amount processing means for calculating a sales amount of the store and a funded pension amount for the user, based on settlement amount information calculated according to the purchase of the product and deduction information set by the store selling the product to support the user; and funded pension registration means for registering the funded pension information on the funded pension amount calculated by the settlement amount processing means in the funded pension information storage means in association with the user identification information for identifying the user who has purchased the product. When the application-allowed person determination means determines whether or not the user associated with the purchase of the product is the application-allowed person who satisfies the application allowance condition for the funded pension service, the inquiry request transmission means makes an inquiry to the human resources information management device about whether or not the user is the application-allowed person. When the human resources information related to the extracted application allowance condition for the funded pension service is not registered in the user information storage means, the application-allowed person determination means determines whether or not the user associated with the purchase of the product is the application-allowed person who satisfies the application allowance condition for the funded pension service, based on the response information received by the response information reception means. The settlement amount processing means calculates the sales amount and the funded pension amount upon receipt of information from the application-allowed person determination means, indicating that the user is the application-allowed person who satisfies the application allowance condition for the funded pension service.

More specifically, a first funded pension processing device according to the present invention having the basic configuration described above further includes: checkout processing means for acquiring price information of the product in response to the purchase of the product by the user, and calculating a settlement amount; deduction information acquisition means for acquiring deduction information set by the store selling the product to support the user; and user information acquisition means for acquiring the user identification information for identifying the user who purchases the product. Upon receipt of the information indicating that the user is the application-allowed person who satisfies the application allowance condition for the funded pension service from the application-allowed person determination means in response to acquisition of payment information, the settlement amount processing means calculates the sales amount and the funded pension amount based on the settlement amount information on the settlement amount calculated by the checkout processing means and the deduction information acquired by the deduction information acquisition means. The funded pension registration means registers the funded pension information based on the user identification information acquired by the user information acquisition means.

A second funded pension processing device according to the present invention is further configured to be able to communicate through a network with a store terminal installed in a store selling a product, and further includes: settlement information reception means for receiving settlement information from the store terminal, including the user identification information for identifying the user who has purchased the product, the settlement amount information on the purchase of the product by the user, the store identification information for identifying the store that has sold the product, and the deduction information set by the store selling the product to support the user; and processing information transmission means for transmitting to the store terminal sales information on the sales amount and funded pension information on the funded pension amount, which are calculated by the settlement amount processing means. Upon receipt of the information indicating that the user is the application-allowed person who satisfies the application allowance condition for the funded pension service from the application-allowed person determination means, the settlement amount processing means calculates the sales amount and the funded pension amount based on the settlement amount information and the deduction information included in the settlement information received by the settlement information reception means. The funded pension registration means registers the funded pension information based on the user identification information included in the settlement information received by the settlement information reception means.

A third funded pension processing device according to the present invention is further configured to be able to communicate through a network with a store terminal installed in a store selling a product, and further includes: deduction information storage means for storing, for each store, deduction information set by the store selling the product to support the user; settlement information reception means for receiving settlement information from the store terminal, including the user identification information for identifying the user who has purchased the product, the settlement amount information on the purchase of the product by the user, and the store identification information for identifying the store that has sold the product; deduction information extraction means for referring to the deduction information storage means based on the store identification information included in the settlement information received by the settlement information reception means, and extracting the deduction information registered in association therewith; and processing information transmission means for transmitting to the store terminal sales information on the sales amount and funded pension information on the funded pension amount, which are calculated by the settlement amount processing means. Upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means. The funded pension registration means registers the funded pension information based on the user identification information included in the settlement information received by the settlement information reception means.

A fourth funded pension processing device according to the present invention is further configured to be able to communicate through a network with a store terminal installed in a store selling a product, and further includes: deduction information storage means for storing, for each store, deduction information set by the store selling the product to support the user; settlement information reception means for receiving settlement information from the store terminal, including the user identification information for identifying the user who has purchased the product, the settlement amount information on the purchase of the product by the user, the store identification information for identifying the store that has sold the product, and product identification information for identifying the product; deduction information extraction means for referring to the deduction information storage means based on the store identification information and the product identification information included in the settlement information received by the settlement information reception means, and extracting the deduction information registered in association therewith; and processing information transmission means for transmitting to the store terminal sales information on the sales amount and funded pension information on the funded pension amount, which are calculated by the settlement amount processing means. Upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means. The funded pension registration means registers the funded pension information based on the user identification information included in the settlement information received by the settlement information reception means.

A fifth funded pension processing device according to the present invention is a funded pension processing device for providing a cloud computing service, which is further configured to be able to communicate through a network with a store terminal installed in a store selling a product, and further includes : deduction information storage means for storing, for each store, product identification information and deduction information set by the store selling the product to support the user in association with each other; store information storage means for storing, for each store, product identification information for identifying a product, price information of the product, and information indicating whether or not the deduction information is set, in association with each other; checkout processing means for acquiring through the store terminal store identification information for identifying the store that has sold the product and product identification information for identifying the product, in response to the purchase of the product by the user, and specifying price information based on the store identification information and the product identification information by referring to the store information storage means to calculate the settlement amount and check if the deduction information is set for the product; deduction information specification means for specifying, when it is confirmed by the checkout processing means that the deduction information is set, deduction information based on the store identification information and the product identification information by referring to the deduction information storage means; and user information acquisition means for acquiring through the store terminal the user identification information for identifying the user who purchases the product. Upon receipt of the information indicating that the user is the application-allowed person who satisfies the application allowance condition for the funded pension service from the application-allowed person determination means in response to acquisition of payment information, the settlement amount processing means calculates the sales amount and the funded pension amount based on the settlement amount information on the settlement amount calculated by the checkout processing means and the deduction information acquired by the deduction information specification means. The funded pension registration means registers the funded pension information based on the user identification information acquired by the user information acquisition means.

A sixth funded pension processing device according to the present invention is further configured to be able to communicate through a network with a user terminal used by a user who purchases a product, and further includes: deduction information storage means for storing, for each store, deduction information set by the store selling the product to support the user; settlement information reception means for receiving settlement information from the user terminal, including the user identification information for identifying the user who has purchased the product, the settlement amount information on the purchase of the product by the user, and the store identification information for identifying the store that has sold the product; deduction information extraction means for referring to the deduction information storage means based on the store identification information included in the settlement information received by the settlement information reception means, and extracting the deduction information registered in association therewith; and processing information transmission means for transmitting to the store terminal sales information on the sales amount and funded pension information on the funded pension amount, which are calculated by the settlement amount processing means, based on the store identification information included in the settlement information received by the settlement information reception means. Upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means. The funded pension registration means registers the funded pension information based on the user identification information included in the settlement information received by the settlement information reception means.

A seventh funded pension processing device according to the present invention is further configured to be able to communicate through a network with a user terminal used by a user who purchases a product, and further includes: deduction information storage means for storing, for each store, deduction information set by the store selling the product to support the user; settlement information reception means for receiving settlement information from the user terminal, including the user identification information for identifying the user who has purchased the product, the settlement amount information on the purchase of the product by the user, the store identification information for identifying the store that has sold the product, and settlement information including product identification information for identifying the product; deduction information extraction means for referring to the deduction information storage means based on the store identification information and the product identification information included in the settlement information received by the settlement information reception means, and extracting the deduction information registered in association therewith; and processing information transmission means for transmitting to the store terminal sales information on the sales amount and funded pension information on the funded pension amount, which are calculated by the settlement amount processing means, based on the store identification information included in the settlement information received by the settlement information reception means. Upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means. The funded pension registration means registers the funded pension information based on the user identification information included in the settlement information received by the settlement information reception means.

The funded pension processing device of the present invention may be further configured to be able to communicate through a network with a plurality of communication terminals, and further include assignment information storage means for storing, for each user at his/her request, assignment information indicating that a part of a funded pension reserved according to the purchase of the product by the user is assigned to a third party other than the user. The funded pension information storage means may store funded pension information on a funded pension amount for the third party as the user. The settlement amount processing means may extract the assignment information based on the user identification information by referring to the assignment information storage means after calculating the funded pension amount, and further calculates the funded pension amount for the user and the assigned funded pension amount for the third party, based on the assignment information and the funded pension amount. The funded pension registration means may register funded pension information on the funded pension amount in the funded pension information storage means in association with the user identification information, and also register the funded pension information on the assigned funded pension amount in the funded pension information storage means in association with the user identification information of the third party.

The funded pension processing device of the present invention may further include: store information storage means for storing information on an applicable period of the funded pension service; and applicable period determination means for determining whether or not the date associated with the purchase of the product is the applicable period of the funded pension service, by referring to the store information storage means. The settlement amount processing means may calculate the sales amount and the funded pension amount upon receipt of information from the determination processing means, indicating that the date is the applicable period of the funded pension service.

The funded pension processing device of the present invention may be further configured to be able to communicate through a network with a plurality of communication terminals, and further include: user information storage means for storing notified party information for each user whose funded pension information is stored in the funded pension information storage means; and funded pension information extraction means for extracting the funded pension information for each user registered in the funded pension information storage means after the elapse of a predetermined period, and for extracting the notified party information on the applicable user from the user information storage means. The processing information transmission means may transmit the funded pension information extracted by the funded pension information extraction means to each user based on the notified party information extracted together.

The funded pension processing device of the present invention may be further configured to be able to communicate through a network with a plurality of communication terminals, and further include: inquiry request reception means for receiving an inquiry request for the funded pension information, together with the user identification information, from the user terminal; and funded pension information extraction means for referring to the funded pension information storage means based on the user identification information included in the inquiry request received by the inquiry request reception means, and for extracting the funded pension information registered in association therewith. The processing information transmission means may transmit the funded pension information extracted by the funded pension information extraction means to the user terminal.

The funded pension processing device of the present invention, except for the first funded pension processing device described above, may be further configured to be able to communicate through a network with a plurality of communication terminals, and further include: processing information storage means for storing, for each store, total sales information obtained by adding up the sales amounts, total funded pension information obtained by adding up the funded pension amounts, and the notified party information for each store; and processing information extraction means for extracting the total sales information and/or total funded pension information for each store registered in the processing information storage means and also extracting the notified party information for the applicable store from the processing information storage means after the elapse of a predetermined period. The processing information transmission means may transmit the total sales information and/or total funded pension information extracted by the processing information extraction means to each store terminal based on the notified party information extracted together.

The funded pension processing device of the present invention, except for the first funded pension processing device described above, may be further configured to be able to communicate through a network with a plurality of communication terminals, and further include: processing information storage means for storing, for each store, total sales information obtained by adding up the sales amounts and total funded pension information obtained by adding up the funded pension amounts; inquiry request reception means for receiving an inquiry request for the total sales information and/or total funded pension information, together with the store identification information, from the store terminal; and processing information extraction means for referring to the processing information storage means based on the store identification information included in the inquiry request received by the inquiry request reception means, and for extracting the total sales information and/or total funded pension information registered in association therewith. The processing information transmission means may transmit the total sales information and/or total funded pension information extracted by the processing information extraction means to the store terminal.

The funded pension processing device of the present invention may be further configured to be able to communicate through a network with a plurality of communication terminals, and further include: user information storage means for storing notified party information for each user to whom the funded pension service is applicable; target product information storage means for storing, for each store, target product information on a target of the funded pension service; target product information reception means for receiving the target product information together with the store identification information from the store terminal; target product information registration means for registering the received target product information in the target product information storage means; and target product information extraction means for extracting the target product information registered in the target product information storage means and also extracting the notified party information of the applicable user from the user information storage means. The processing information transmission means may transmit the target product information extracted by the target product information extraction means to each user based on the notified party information.

The funded pension processing device of the present invention may be further configured to be able to communicate through a network with a plurality of communication terminals, and further include: target product information storage means for storing, for each store, target product information on a target of the funded pension service; target product information reception means for receiving the target product information together with the store identification information from the store terminal; target product information registration means for registering the received target product information in the target product information storage means; inquiry request reception means for receiving an inquiry request for the target product information together with the user identification information from the user terminal; and target product information extraction means for extracting the target product information by referring to the target product information storage means. The processing information transmission means may transmit the target product information extracted by the target product information extraction means to the user terminal.

The funded pension processing device of the present invention may be further configured to be able to communicate through a network with a plurality of communication terminals, and further include: user information storage means for storing, for each user, workplace information where the user works; subsidiary conditions information storage means for storing subsidiary conditions information on a part of the settlement amount that can be subsidized in response to the purchase of the product by the user; and subsidiary availability determination means for extracting the workplace information by referring to the user information storage means and for determining whether or not there is subsidiary conditions information and whether or not the subsidization can be performed, based on the workplace information, by referring to the subsidiary conditions information storage means, and then extracting subsidiary information on a subsidiary amount when it is determined that the subsidization can be performed. When the subsidiary information is extracted by the subsidiary availability determination means, the funded pension registration means may register the subsidiary information as the funded pension information based on the user identification information.

### EFFECTS OF THE INVENTION

According to the funded pension processing device of the present invention, a store selling a product previously sets deduction information to support a user who purchases the product, and a sales amount of the store and a funded pension amount for the user are calculated based on settlement amount information calculated in response to the purchase of the product and the deduction information, aside from ordinary checkout processing performed at the store when the user purchases the product at the store. Therefore, the user has his/her pension automatically reserved from among his/her living expenses for daily consumption such as the purchase of the product, rather than reserving the pension separately from the living expenses . This makes it possible to reserve the pension less stressfully while avoiding low consumer spending.

Moreover, the funded pension processing device of the present invention is configured to be able to communicate through a network with a human resources information management device having human resources information storage means storing human resources information of the user as a laborer. Thus, the funded pension service can be provided by further limiting to a user that the store wishes to support based on the human resources information, rather than every user.

Furthermore, in the present invention, the conventional pay-as-you-go public pension plan and the funded individual pension plan as described above are used in combination to enable the funded pension to be received separately from the public pension. Thus, concerns about the life after retirement can be reduced by compensating for the pay-as-you-go public pension that is likely to be reduced in the future. Moreover, the funded individual pension plan described above makes it possible even for immigrants or people of a class who cannot receive the pay-as-you-go public pension to reserve their pensions without feeling unfairness through daily consumption.

Therefore, a technique can be provided that can eliminate concerns about the life after retirement while avoiding low consumer spending and also expect the store to efficiently and effectively make a social contribution by reserving the pension effortlessly through consumption such as purchase of products.

### BRIEF DESCRIPTION OF THE DRAWINGS

Fig. 1 is a functional block diagram showing basic functions included in a funded pension processing device of the present invention.
Fig. 2 is a diagram showing an example of data stored in a funded pension information database included in the funded pension processing device of the present invention.
Fig. 3 is a functional block diagram showing functions included in a first funded pension processing device of the present invention.
Fig. 4 is a sequence diagram showing an example of a system using the first funded pension processing device of the present invention.
Fig. 5 is a flowchart showing an example of processing performed by the first funded pension processing device of the present invention.
Fig. 6 is a functional block diagram showing functions included in a second funded pension processing device of the present invention.
Fig. 7 is a sequence diagram showing an example of a system using the second funded pension processing device of the present invention.
Fig. 8 is a flowchart showing an example of processing performed by the second funded pension processing device of the present invention.
Fig. 9 is a functional block diagram showing functions included in a third funded pension processing device of the present invention.
Fig. 10 is a diagram showing an example of data stored in a deduction information database included in the third (or fifth) funded pension processing device of the present invention.
Fig. 11 is a sequence diagram showing an example of a system using the third funded pension processing device of the present invention.
Fig. 12 is a flowchart showing an example of processing performed by the third funded pension processing device of the present invention.
Fig. 13 is a functional block diagram showing functions included in a fourth funded pension processing device of the present invention.
Fig. 14 is a diagram showing an example of data stored in a deduction information database included in the fourth (or sixth) funded pension processing device of the present invention.
Fig. 15 is a sequence diagram showing an example of a system using the fourth funded pension processing device of the present invention.
Fig. 16 is a flowchart showing an example of processing performed by the fourth funded pension processing device of the present invention.
Fig. 17 is a functional block diagram showing functions included in the fifth funded pension processing device of the present invention.
Fig. 18 is a diagram showing an example of data stored in a store information database included in the fifth funded pension processing device of the present invention.
Fig. 19 is a sequence diagram showing an example of a system using the fifth funded pension processing device of the present invention.
Fig. 20 is a flowchart showing an example of processing performed by the fifth funded pension processing device of the present invention.
Fig. 21 is a functional block diagram showing functions included in a sixth funded pension processing device of the present invention.
Fig. 22 is a sequence diagram showing an example of a system using the sixth funded pension processing device of the present invention.
Fig. 23 is a flowchart showing an example of processing performed by the sixth funded pension processing device of the present invention.
Fig. 24 is a functional block diagram showing functions included in a seventh funded pension processing device of the present invention.
Fig. 25 is a sequence diagram showing an example of a system using the seventh funded pension processing device of the present invention.
Fig. 26 is a flowchart showing an example of processing performed by the seventh funded pension processing device of the present invention.
Fig. 27 is a functional block diagram showing other functions included in the funded pension processing device of the present invention.
Fig. 28 is a diagram showing an example of data stored in a store information database included in the funded pension processing device of the present invention shown in Fig. 27.
Fig. 29 is a diagram showing an example of data stored in a user information database included in the funded pension processing device of the present invention shown in Fig. 27.
Fig. 30 is a diagram showing an example of data stored in another user information database included in the funded pension processing device of the present invention shown in Fig. 27.
Fig. 31 is a diagram showing an example of data stored in an application information database included in the funded pension processing device of the present invention shown in Fig. 27.
Fig. 32 is a diagram showing an example of data stored in a processing information database included in the funded pension processing device of the present invention shown in Fig. 27.
Fig. 33 is a diagram showing an example of data stored in a target product information database included in the funded pension processing device of the present invention shown in Fig. 27.
Fig. 34 is a diagram showing an example of data stored in a support condition information database included in the funded pension processing device of the present invention shown in Fig. 27.
Fig. 35 is a diagram showing an example of data stored in an assignment information database included in the funded pension processing device of the present invention shown in Fig. 27.
Fig. 36 is a diagram showing an example of an assignment information input screen included in the funded pension processing device of the present invention.
Fig. 37 is a flowchart showing an example of processing performed by the funded pension processing device of the present invention shown in Fig. 27.
Fig. 38 is a flowchart showing an example of processing performed by the funded pension processing device of the present invention shown in Fig. 27.
Fig. 39 is a flowchart showing an example of processing to determine whether or not services are applicable in the funded pension processing device of the present invention shown in Fig. 27, based on human resources information.

### MODES FOR CARRYING OUT THE INVENTION

With reference to the drawings, description is given below of a funded pension processing device according to an embodiment of the present invention.

A funded pension processing device 1 of the present invention is a device for providing a funded pension service to reserve a part of a settlement amount for a product as an individual pension to the user who has purchased the predetermined product.

Also, when referring to product purchase in the present invention, the product is limited neither to a tangible or intangible object nor to a movable or immovable property, but also includes intangible services and includes at least transactions in general to be paid for.

It is to be understood that the following embodiment represents merely a preferred concrete example of the present invention with a variety of technically preferable restrictions annexed thereto, but the scope of the invention is not limited to such embodiment alone unless any specific restriction is given in the explanation below.

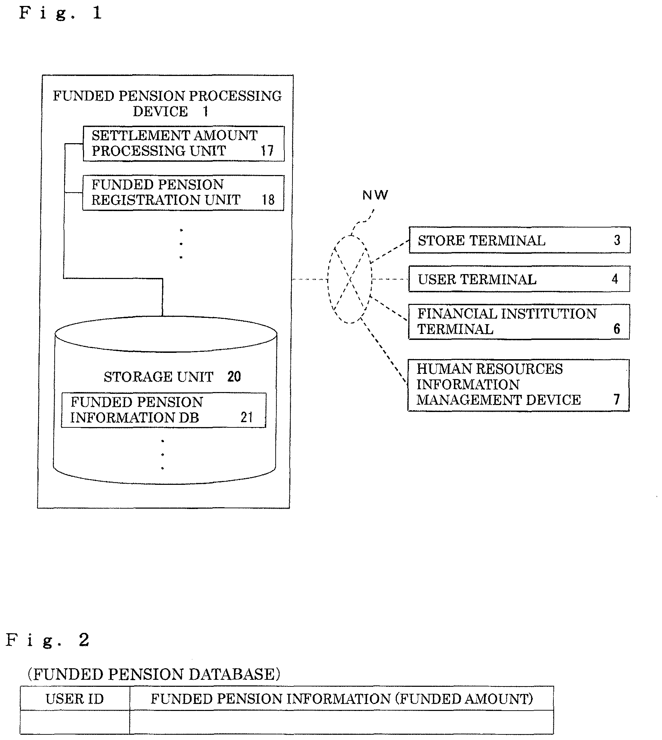

First, Fig. 1 shows a basic configuration of a funded pension processing device of the present invention.

A funded pension processing device 1 of the present invention is realized by a so-called server computer or the like, and includes hardware resources such as a central processing unit (CPU), a random access memory (RAM), a read only memory (ROM), and a hard disk drive as well as software resources such as computer programs to be executed by the CPU. The funded pension processing device 1 also includes a storage unit 20 that stores databases and the like required to provide a funded pension service.

As shown in Fig. 1, the funded pension processing device 1 has a basic configuration including at least a settlement amount processing unit 17, a funded pension registration unit 18, and the storage unit 20. The storage unit 20 includes at least a funded pension information database (hereinafter abbreviated as the "funded pension information DB") 21.

Note that the funded pension processing device 1 is illustrated as a single configuration in this embodiment, but is not limited thereto and may also be configured using more than one computer and the like.

The funded pension information DB 21 is means for storing funded pension information on a funded pension amount reserved according to the purchase of a product for each user. More specifically, as shown in Fig. 2, the funded pension information DB 21 stores funded pension information in association with user identification information (hereinafter referred to as the "user ID") for identifying a user registered to use the funded pension service.

Here, the user ID registered in the funded pension information DB 21 refers to a unique identification marker given by an operator of the funded pension service to identify the user of the service. The user ID described in the present invention includes settlement card information (for example, a card number and a cardholder) on a credit card, a debit card or the like that is used by the user, terminal information (for example, a phone number and a contractor name) used for electronic settlement, and card information of a membership card (for example, a card number and the name of a member) which is issued to the user registered to receive the funded pension service.

More specifically, in the present invention, the settlement card information on a credit card, a debit card or the like that is used by the user for settlement, the terminal information used by the user for electronic settlement, and the card information of the membership card issued to the user, all of which are registered in advance by the user to receive the funded pension service, are associated with the user ID. This association may be performed in the funded pension information DB 21 or may be performed in a user information database (hereinafter abbreviated as the "user information DB") when the user information DB is additionally provided as described later. That is, it is assumed that, according to the embodiment of the funded pension processing device 1 to be described later, registration and management of the funded pension information with the funded pension information DB 21 can be performed more easily and more efficiently by using the user information DB to register and manage the settlement card information, the terminal information, and the membership card information in association with the user ID, rather than using the funded pension information DB 21.

Thus, the user ID can be specified based on the card information and the like used by the user to make settlement for a product purchased at a store, and the funded pension information can be registered in the funded pension information DB 21. To be more specific, for example, when the user uses his/her credit card to make settlement, his/her user ID can be specified by referring to the user information DB or the funded pension information DB 21 based on the credit card information acquired and identifying the user ID registered in association therewith. Alternatively, when the user uses cash or a gift certificate to make settlement, his/her user ID can be specified, as in the case of the credit card, from the membership card information acquired by requesting the user to present his/her membership card.

Therefore, in the present invention, the user can be identified also when he/she makes payment with his/her credit card or debit card, prepaid card, electronic money (which can be used for online payment of which issuer is known), cryptocurrency (virtual currency such as bit coin which can be used for online payment of which issuer is not known) or gift certificate, other than cash, during settlement for a product purchased at a store.

The settlement amount processing unit 17 is means having functions to calculate a sales amount at a store and a funded pension amount for the user, respectively, based on settlement amount information derived from the purchase of a product and deduction information set by the store selling the product to support the user.

The settlement amount information in the present invention includes both of settlement amount information on individual product prices and settlement amount information on the sum of multiple product prices. That is, when deduction information is set for each product or when there is a product for which deduction information is set and a product for which no deduction information is set, the settlement amount information is about the settlement amount related to individual product prices. Alternatively, when deduction information is not set for each product but set for each transaction at the store, the settlement amount information is about the settlement amount related to the sum of multiple product prices. Therefore, when deduction information is set for each product or when there is a product for which deduction information is set and a product for which no deduction information is set, the settlement amount processing unit 17 calculates a sales amount and a funded pension amount for each product based on the individual product prices and the deduction information, and then adds up the respective sales amounts and funded pension amounts to calculate the sales amount at the store and the funded pension amount for the user. On the other hand, when the deduction information is set for each transaction at the store, the settlement amount processing unit 17 calculates the sales amount at the store and the funded pension amount for the user based on the settlement amount information related to the sum of multiple products and the deduction information.

When the settlement amount information includes no tax, the settlement amount processing unit 17 calculates the store sales amount by reducing the settlement amount based on the deduction information, and also calculates the funded pension amount for the user by subtracting the calculated sales amount from the settlement amount. On the other hand, when the settlement amount information includes a tax, the settlement amount processing unit 17 calculates a tax excluded settlement amount by subtracting a tax amount from the settlement amount and then calculates a tax excluded sales amount at the store by reducing the tax excluded settlement amount based on the deduction information. Thereafter, the settlement amount processing unit 17 calculates the store sales amount by multiplying the tax excluded sales amount by a tax rate, and also calculates the funded pension amount for the user by subtracting the calculated sales amount from the settlement amount.

Here, attention should be paid when the settlement amount information includes a tax since the calculation of the store sales amount simply by reducing the settlement amount based on the deduction information results in the sales amount including the tax amount for the funded pension amount for the user, leading to reduction in the funded pension amount for the user. More specifically, when the settlement amount including a tax of 8% is 2160 yen and the deduction amount is 200 yen, calculation of a store sales amount of 1960 yen (including a tax of 145 yen) simply by subtracting the deduction amount of 200 yen from the settlement amount of 2160 yen results in the funded pension amount of 200 yen for the user. However, the tax is supposed to be imposed on 1800 yen obtained by subtracting the deduction amount of 200 yen from the tax excluded settlement amount of 2000 yen. Therefore, in actuality, the store sales needs to be 1944 yen (including a tax of 144 yen) and the funded pension amount for the user needs to be 216 yen. Consequently, it is not desirable to calculate the store sales amount simply by reducing the settlement amount based on the deduction information, since the store sales is increased by 16 yen and the funded pension amount for the user is reduced by 16 yen.

Meanwhile, the deduction information does not correspond to an amount that is reduced during checkout at the store and can be checked on the spot by the user, but corresponds to an amount that is reduced after checkout at the store and can be checked later by the user. Therefore, ordinary checkout processing is performed at the store with no need to perform any special operation during the purchase of a product by the user. Thus, the settlement amount processing unit 17 automatically calculates the funded pension amount for the user based on the settlement amount information and the deduction information.

The funded pension registration unit 18 is means having a function to register the funded pension information on the funded pension amount calculated by the settlement amount processing unit 17 in the funded pension information DB 21, in association with the user ID for identifying the user who has purchased the product.

The funded pension is calculated based on the deduction information set for the user by the store, and therefore may appear to be donated to the user by the store. However, the deduction information is the same as discount or saving generally performed at the store, and thus corresponds per se to an amount that should be returned to the user during payment for the purchase of the product.

In the present invention, the amount that should be returned during the payment is not received by the user but is instead kept temporarily at the store, and the funded pension amount for the user calculated by the funded pension processing device 1 is deposited into a predetermined account by the store and thus reserved by the store on behalf of the user.

Therefore, the funded pension in the present invention can be said to be the amount obtained by the user automatically saving through the store the amount that should originally be received by the user, and is not at all the amount that is donated or given to the user by the store. Note that a sales detailed statement (so-called receipt) issued by the store for the purchase of the product may present the store sales amount (i.e., actual product purchase amount) calculated by the settlement amount processing unit 17 and the funded pension amount for the user (i.e., the amount that should be returned) .

Moreover, in the present invention, in the sale of so-called clearance goods or the like, such goods are sold at a normal price to the public who are not the users of this funded pension service, and can be sold at a reduced price only to the users of the funded pension service. Therefore, the purchase at the normal price by the public can be expected and thus a decline in sales can be suppressed compared with the conventional reduced-price sales called special offering. Particularly in the case of products that need to be discarded such as food, close-to-date products can be sold to the users of the funded pension service without openly providing reduced-price sales such as a limited offer. This eliminates the withholding of purchases hoping for the reduced-price sales. As a result, food disposal loss can be reduced.

Moreover, the deduction information set in the present invention can be used along with the conventional reduced-price sales . That is, for the public, a deduction is made only during checkout at a cashier in the store. On the other hand, for the user of this funded pension service, a deduction is made during checkout at the cashier in the store, and a deduction is also made based on the deduction information after the checkout. Then, the amount for the deduction made after the checkout is reserved as a pension.

Moreover, the funded pension processing device 1 can be configured to operate (run) independently (so-called stand-alone type) according to a mode of transaction to purchase a product, a mode of settlement to pay for the product, a mode of computer processing, a case where conditions of application are set to provide the funded pension service, and the like. Alternatively, the funded pension processing device 1 can be configured to be able to communicate with a store terminal 3 installed in a store that sells products, a user terminal 4 of a user who uses the funded pension service, a financial institution terminal 6, and a human resources information management device 7 through a network NW such as the Internet as indicated by the dotted lines in Fig. 1.

### Embodiment 1

Next, description is given of each of embodiments based on the funded pension processing device of the present invention described above.

Note that, in each of the embodiments described below, description is mainly given of difference from the basic funded pension processing device described above. Therefore, the same constituent portions are denoted by the same reference numerals, and description thereof is omitted and considered to be the same unless otherwise noted.

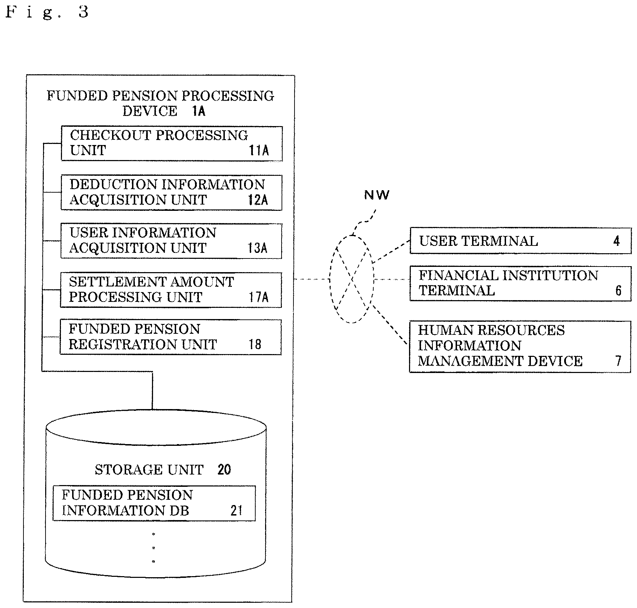

First, Fig. 3 shows a configuration of a first funded pension processing device 1A of the present invention.

As shown in Fig. 3, the first funded pension processing device 1A of the present invention includes a checkout processing unit 11A, a deduction information acquisition unit 12A, a user information acquisition unit 13A, a settlement amount processing unit 17A, a funded pension registration unit 18, and a storage unit 20 including a funded pension information DB 21.

The funded pension processing device 1A is a computer equipped with a basic function as a cash register (hereinafter simply referred to as the "cashier"), which is configured to operate (run) independently. The funded pension processing device 1A can also include additional functions as needed, such as a receipt issuance function, a multiple product registration function, a category management function, a single-item management function, a change calculation function, an automatic change function, an extra/discount function, a network function, a point of sale (POS) function, a credit card/electronic money processing function (the same function as a credit reference terminal), and a client management function (membership card read function).

The checkout processing unit 11A is means having a function to acquire price information of a product according to the purchase of the product by a user and to calculate the settlement amount. The price information can be acquired by entering (typing) a numeric key according to a product price at the cashier or by reading with a bar-code scanner a one-dimensional bar code such as a JAN code, an EAN code, and a UPC attached to the product or a two-dimensional bar code such as a QR code, a data matrix, and a MaxiCode. In other words, the price information may be contained in such a bar code.

Alternatively, the price information may also be registered in a product master or the like provided in the cashier in association with product identification information (hereinafter referred to as the "product ID") for identifying a product, and may be acquired (specified) based on the product ID acquired by reading a bar code with the bar-code scanner. In other words, the product ID may be contained in the bar code.

Meanwhile, the settlement amount can be calculated with the calculation function (multiple product registration function) of the cashier.

The deduction information acquisition unit 12A is means having a function to acquire deduction information set by the store selling the product to support the user.

The deduction information is information corresponding to a funded pension amount, such as ○○ saving or oo % discount, which is set for each store or product and can be acquired by reading a bar code. In other words, the deduction information may be contained in the bar code.

Alternatively, the deduction information may also be registered in a product master or the like provided in the cashier in association with the product ID, and may be acquired (specified) based on the product ID acquired by reading a bar code with the bar-code scanner, as in the case of the acquisition of the price information of the product by the checkout processing unit 11A. The deduction information may also be set for a settlement amount and calculated based on the settlement amount.

The user information acquisition unit 13A is means having a function to acquire a user ID for identifying a user who purchases a product.

The user ID is the settlement card information, the terminal information, and the membership card information, as described above, and can be acquired using the credit card/electronic money processing function and the client management function of the cashier. More specifically, the user ID can be acquired by a card reader/writer built in (or connected to) the funded pension processing device.

Upon acquisition of payment information, the settlement amount processing unit 17A is means having a function to calculate a sales amount and a funded pension amount, based on the settlement amount information on the settlement amount calculated by the checkout processing unit 11A and the deduction information acquired by the deduction information acquisition unit 12A.

In this event, the payment information can be information capable of recognizing the pressing of a cash selling/deposit key, a credit sale key, a ticket selling key or the like at the cashier.

Moreover, the funded pension processing device 1A according to the present invention includes the credit card/electronic money processing function such as the card reader/writer so as to be able to support a credit card, a debit card, a prepaid card, electronic money and the like as well as cash for payment at the cashier.

The funded pension registration unit 18 is means having a function to register the funded pension information on the funded pension amount calculated by the settlement amount processing unit 17A in the funded pension information DB 21 based on the user ID acquired by the user information acquisition unit 13A.

Note that the funded pension information registered by the funded pension registration unit 18 may be transmitted in real time to an external storage device for management or may be transmitted thereto at regular time intervals or at a predetermined time for management.

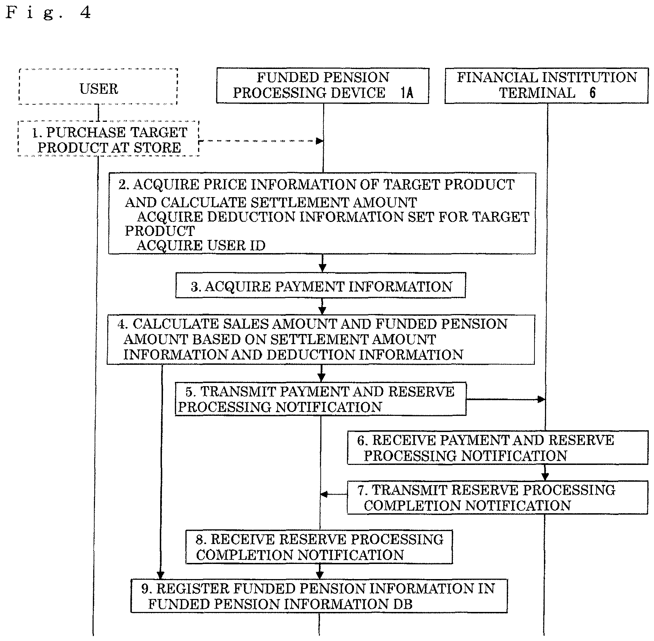

Next, with reference to Fig. 4, description is given of a flow of processing in a funded pension processing system for implementing a funded pension processing method according to a first embodiment of the present invention (hereinafter referred to as the "first method").

Note that the first funded pension processing device 1A of the present invention realizes the first method described below by executing a first computer program.

First, in order to receive a funded pension service, a user registers himself/herself to use the service in advance or when he/she purchases a target product for the funded pension service.

Next, the user takes a deduction target product to be purchased to a cashier in a store, which functions as the funded pension processing device 1A (1).

Then, in response to the purchase of the product by the user, the funded pension processing device 1A acquires price information of the product and calculates a settlement amount (2). The funded pension processing device 1A also acquires deduction information set for the product by the store selling the product to support the user (2). The funded pension processing device 1A further acquires a user ID for identifying the user who purchases the product (2).

Next, the funded pension processing device 1A acquires payment information (3).

Then, upon acquisition of the payment information, the funded pension processing device 1A calculates a sales amount of the store and a funded pension amount for the user, based on settlement amount information on the settlement amount and the deduction information (4) .

Note that the user ID may be acquired after the acquisition of the payment information.

Thereafter, the funded pension processing device 1A registers funded pension information on the calculated funded pension amount in the funded pension information DB 21 based on the user ID (9).

When the funded pension processing device 1A according to the present invention is configured to be able to communicate through a network with a financial institution terminal 6 that executes processing for settlement of the settlement amount, a reserve processing notification may be transmitted to the financial institution terminal 6 after the calculation of the sales amount of the store and the funded pension amount for the user (5).

The reserve processing notification includes a reserve processing request to request that a funded pension be reserved for the user, together with store identification information (hereinafter referred to as the "store ID") for identifying the store that has sold the product, the user ID, and the funded pension information on the funded pension amount.

The financial institution terminal 6 receives the reserve processing notification transmitted from the funded pension processing device 1A (6).

After the completion of the reserve processing of the funded pension for the user by the financial institution, the financial institution terminal 6 transmits a reserve processing completion notification to the funded pension processing device 1A (7).

Here, the reserve processing of the funded pension for the user by the financial institution is transferring the funded pension amount based on the funded pension information from a store account of the store that has sold the product to a funded pension account of the user who has purchased the product. Alternatively, the reserve processing may be transferring the funded pension amount from the store account of the store that has sold the product to an operator account of the operator providing the funded pension service. Note that, when the funded pension amount for the user is transferred to the operator account, the operator manages the funded pension by separately providing the funded pension account of the user.

The funded pension processing device 1A receives the reserve processing completion notification transmitted from the financial institution terminal 6 (8).

Then, the funded pension processing device 1A registers the funded pension information on the funded pension amount in the funded pension information DB 21, based on the user ID (9).

Thus, the funded pension processing device 1A according to the present invention can execute the processing of reserving a part of the settlement amount associated with the purchase of the product by the user.

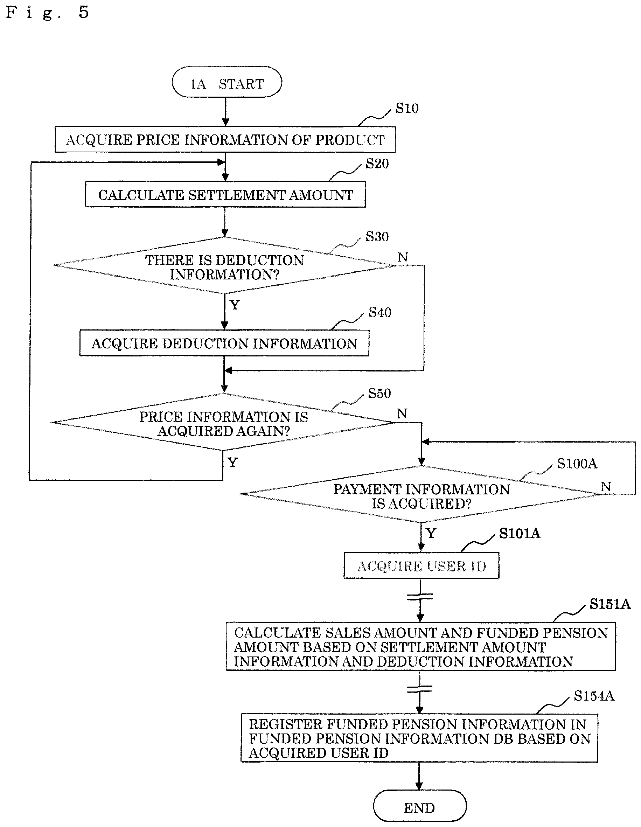

Next, with reference to Fig. 5, description is given of an example of operations of the funded pension processing device 1A executing the first method described above.

First, the checkout processing unit 11A acquires price information of a product (S10).

Then, the checkout processing unit 11A calculates a settlement amount based on the acquired price information of the product (S20) .

Thereafter, the deduction information acquisition unit 12A determines whether or not deduction information is set for the product (S30).

As a result, when having determined that the deduction information is set (Y), the deduction information acquisition unit 12A acquires the deduction information (S40).

Subsequently, the checkout processing unit 11A determines whether or not the price information of the product is acquired again (S50).

Meanwhile, when the deduction information acquisition unit 12A has determined that no deduction information is set (N), the checkout processing unit 11A determines whether or not the price information of the product is acquired again (S50).

As a result, when having determined that the price information of the product is acquired again (Y), the checkout processing unit 11A calculates a settlement amount based on the acquired price information of the product (S20) . Thereafter, the procedures described above are repeated.

On the other hand, when the checkout processing unit 11A has determined that the price information of the product is not acquired again (N), the settlement amount processing unit 17A then determines whether or not payment information is acquired (100A).

As a result, when the settlement amount processing unit 17A has determined that the payment information is acquired (Y), the user information acquisition unit 13A acquires the user ID for identifying the user who purchases the product (S101A).

On the other hand, when having determined that no payment information is acquired (N), the settlement amount processing unit 17A repeats the determination of whether or not the payment information is acquired (S100A).

Note that the acquisition of the user ID by the user information acquisition unit 13A may be performed before the acquisition of the payment information by the settlement amount processing unit 17A.

Upon acquisition of the payment information by the settlement amount processing unit 17A, the settlement amount processing unit 17A subsequently calculates the sales amount of the store and the funded pension amount for the user based on the settlement amount information on the settlement amount calculated by the checkout processing unit 11A and the deduction information acquired by the deduction information acquisition unit 12A (S151A).

Then, the funded pension registration unit 18 registers the funded pension information on the funded pension amount calculated by the settlement amount processing unit 17A in the funded pension information DB 21, based on the user ID acquired by the user information acquisition unit 13A (S154A).

Thus, a series of operations of the first funded pension processing device 1A are completed (end).

### Embodiment 2

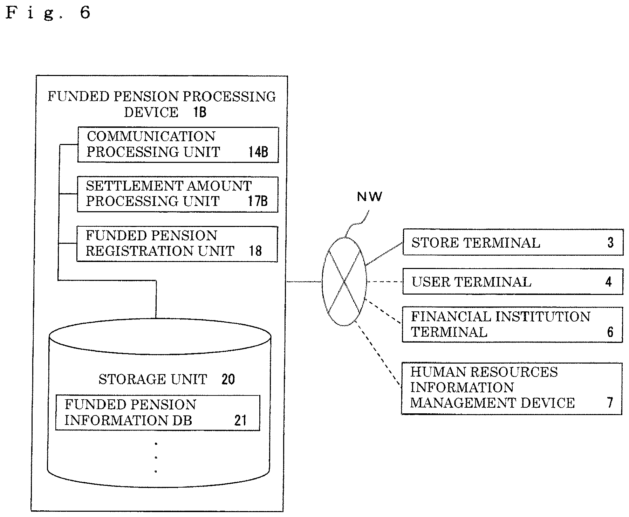

Next, Fig. 6 shows a configuration of a second funded pension processing device 1B of the present invention.

The second funded pension processing device 1B of the present invention is different from the first funded pension processing device 1A described above in being configured so as to be able to communicate with a store terminal 3 through a network NW.

The second funded pension processing device 1B of the present invention is realized by a so-called server computer or the like, and includes a communication processing unit 14B, a settlement amount processing unit 17B, a funded pension registration unit 18, and a storage unit 20 including a funded pension information DB 21, as shown in Fig. 6.

The store terminal 3 is a terminal installed in a store selling products to a user, which is realized as a POS terminal or a computer having functions as the POS terminal.

The store terminal 3 executes processing required for payment associated with the purchase of a product by the user or provides the funded pension processing device 1B with information required to give a funded pension amount set for the product to the user.

Note that the store terminal 3 here also includes a terminal capable of transmission and reception of data or input and output of data through the network, such as a computer that manages virtual stores on a website, so-called online shops selling products through the Internet. The store terminal 3 also includes a portable terminal (so-called handy register) used by an employee working at a store selling products.

The communication processing unit 14B is means having a function to receive a user ID for identifying a user who has purchased a product, settlement amount information on the purchase of the product by the user, a store ID for identifying a store that has sold the product, and settlement information including deduction information set by the store selling the product to support the user, from the store terminal 3. In other words, the communication processing unit 14B functions as settlement information receiving means.

The communication processing unit 14B also has a function to transmit sales information on a sales amount and funded pension information on a funded pension amount, which are calculated by the settlement amount processing unit 17B, to the store terminal 3. Therefore, the communication processing unit 14B also functions as processing information transmitting means.

The settlement amount processing unit 17B is means for calculating a sales amount of the store and a funded pension amount for the user, based on the settlement amount information and the deduction information included in the settlement information received by the communication processing unit 14B, upon receipt of the settlement information.

The funded pension registration unit 18 is means having a function to register the funded pension information on the funded pension amount calculated by the settlement amount processing unit 17B in the funded pension information DB 21 based on the user ID included in the settlement information received by the communication processing unit 14B.

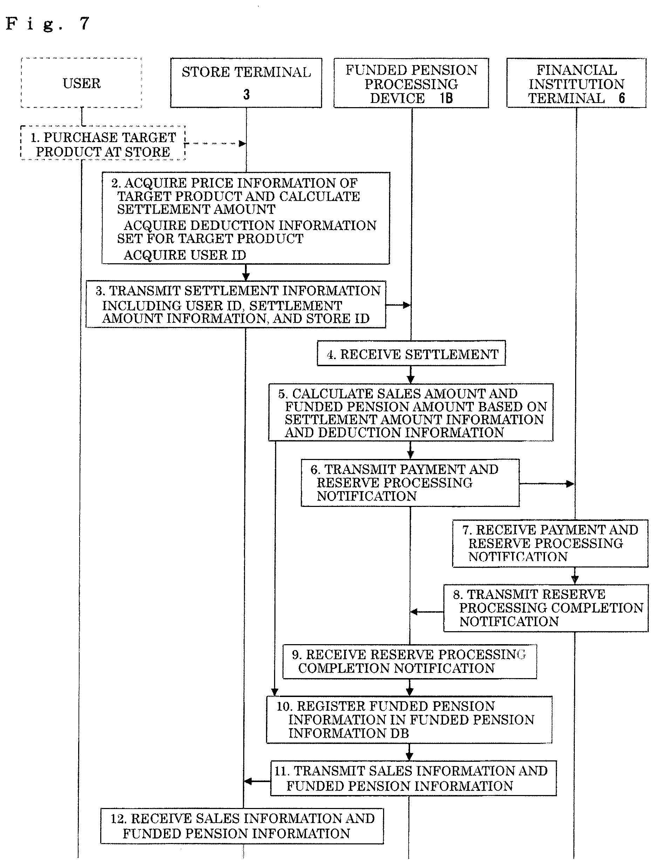

Next, with reference to Fig. 7, description is given of a flow of processing in a funded pension processing system for implementing a funded pension processing method according to a second embodiment of the present invention (hereinafter referred to as the "second method").

Note that the second funded pension processing device 1B of the present invention realizes the second method described below by executing a second computer program.

First, the user takes a deduction target product to be purchased to a cashier in a store (1).

Then, the store terminal 3 acquires price information of the product and calculates a settlement amount (2). The store terminal 3 also acquires deduction information set for the product by the store selling the product to support the user (2). The store terminal 3 further acquires a user ID for identifying the user who purchases the product (2).

Thereafter, the store terminal 3 transmits settlement information including the user ID, the settlement amount information, the store ID, and the deduction information to the funded pension processing device 1B (3). More specifically, upon completion of payment of the settlement amount to the store, the store terminal 3 transmits the settlement information to the funded pension processing device 1B.

Next, the funded pension processing device 1B receives the settlement information transmitted from the store terminal 3 (4).

Then, upon receipt of the settlement information, the funded pension processing device 1B calculates a sales amount of the store and a funded pension amount for the user, based on the settlement amount information and the deduction information included in the settlement information (5).

Thereafter, the funded pension processing device 1B registers the funded pension information on the calculated funded pension amount in the funded pension information DB 21 based on the user ID included in the settlement information (10).

When the funded pension processing device 1B according to the present invention is configured to be able to communicate through a network with a financial institution terminal 6 that executes processing for settlement of the settlement amount, a reserve processing notification may be transmitted to the financial institution terminal 6 after the calculation of the sales amount of the store and the funded pension amount for the user by the settlement amount processing unit 17B (6).

The reserve processing notification includes a reserve processing request to request that a funded pension be reserved for the user, together with the store ID for identifying the store that has sold the product, the user ID, and the funded pension information on the funded pension amount.

The financial institution terminal 6 receives the reserve processing notification transmitted from the funded pension processing device 1B (7).

After the completion of the reserve processing of the funded pension for the user by the financial institution, the financial institution terminal 6 transmits a reserve processing completion notification to the funded pension processing device 1B (8).

Note that the reserve processing of the funded pension for the user by the financial institution is performed in the same manner as that in the first method described above.

The funded pension processing device 1B receives the reserve processing completion notification transmitted from the financial institution terminal 6 (9).

Then, the funded pension processing device 1B registers the funded pension information on the funded pension amount in the funded pension information DB 21, based on the user ID included in the settlement information (10).

Subsequently, the funded pension processing device 1B transmits to the store terminal 3 sales information on the sales amount of the store and funded pension information on the funded pension amount for the user (11).

Then, the store terminal 3 receives the sales information and the funded pension information transmitted from the funded pension processing device 1B (12).

Thus, the funded pension processing device 1B according to the present invention can execute the processing of reserving a part of the settlement amount associated with the purchase of the product by the user.

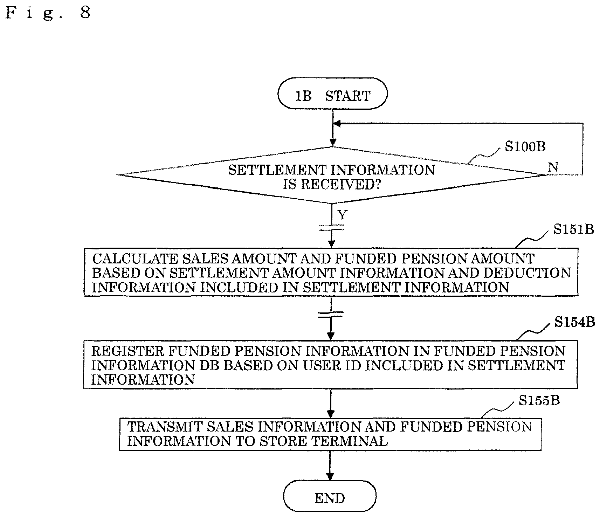

Next, with reference to Fig. 8, description is given of an example of operations of the funded pension processing device 1B executing the second method described above.

First, the communication processing unit 14B determines whether or not settlement information is received, including a user ID for identifying a user who has purchased a product, settlement amount information on the purchase of the product by the user, a store ID for identifying a store that has sold the product, and deduction information set by the store selling the product to support the user (S100B).

As a result, when the communication processing unit 14B has determined that the settlement information is received (Y), the settlement amount processing unit 17B then calculates a sales amount of the store and a funded pension amount for the user, based on the settlement amount information and the deduction information included in the settlement information received by the communication processing unit 14B (S151B).

Thereafter, the funded pension registration unit 18 registers the funded pension information on the funded pension amount calculated by the settlement amount processing unit 17B in the funded pension information DB 21, based on the user ID included in the settlement information received by the communication processing unit 14B (S154B).

On the other hand, when having determined that no settlement information is received (N), the communication processing unit 14B repeats the determination of whether or not the settlement information is received (S100B).

Then, the communication processing unit 14B transmits sales information on the sales amount and the funded pension information on the funded pension amount, which are calculated by the settlement amount processing unit 17B, to the store terminal 3 (S155B). Note that the sales information and the funded pension information may be transmitted to the store terminal 3 that is a destination of the received settlement information, or may be transmitted by pre-registering a communication destination for each store and specifying the communication destination based on the store ID included in the settlement information received by the communication processing unit 14B.

Thus, a series of operations of the second funded pension processing device 1B are completed (end).

### Embodiment 3

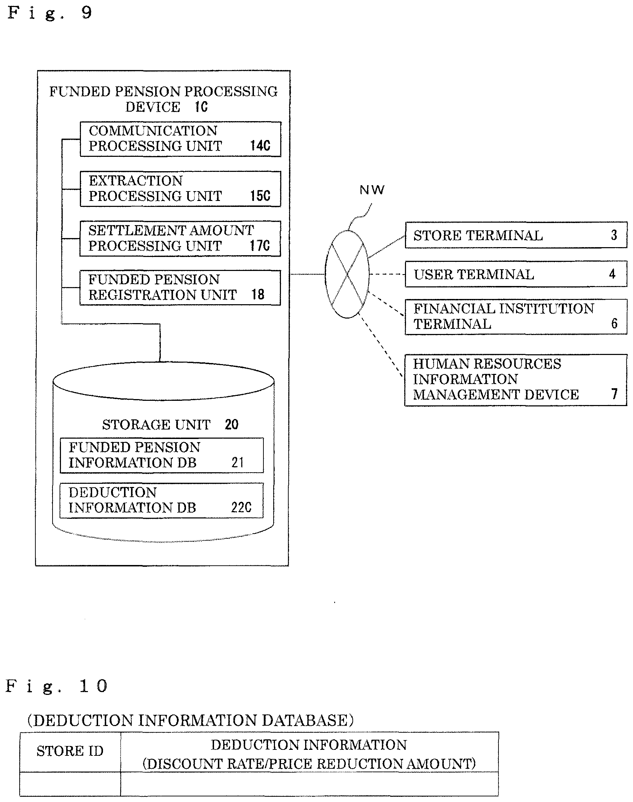

Next, Fig. 9 shows a configuration of the third funded pension processing device 1C of the present invention.

The third funded pension processing device 1C of the present invention is different from the first funded pension processing device 1A described above in being configured to be able to communicate with a store terminal 3 through the store terminal 3 and a network NW. Also, the third funded pension processing device 1C of the present invention is different from the second funded pension processing device 1B described above in excluding the deduction information in the settlement information received from the store terminal 3.

The third funded pension processing device 1C of the present invention is realized by a so-called server computer, and as Fig. 9 describes, the storage unit 20 is configure by including the funded pension information DB 21 and the deduction information database (hereinafter referred to as the "deduction information DB") 22 C, together with the communication processing unit 14C, the extraction processing unit 15C, the settlement amount processing unit 17C, the funded pension registration unit 18.

The deduction information DB 22C is the means for storing the deduction information set by each store selling the product to support the user. Thus, the deduction information DB 22C stores the deduction information in association with the store ID for identifying a store selling the product, as shown in Fig. 10.

The communication processing unit 14C is the means for having the function to receive the user ID for identifying the user who has purchased the product, settlement amount information on the purchase of the product by the user, the store ID for identifying the store that has sold the product, from the store terminal 3. In other words, the communication processing unit 14C functions as the settlement information reception means.

The communication processing unit 14C also has a function to transmit the sales information on a sales amount and funded pension information on a funded pension amount, which are calculated by the settlement amount processing unit 17C, to the store terminal 3. Therefore, the communication processing unit 14C also functions as processing information transmission means.

The extraction processing unit 15C is the means for having the function to extract the deduction information registered in association therewith by referring to the deduction information DB 22C based on the store ID included in the settlement information received from the communication processing unit 14C. Thus, the extraction processing unit 15C functions as deduction information extraction means.

The settlement amount processing unit 17C has a function to calculate a sales amount of the store and a funded pension amount for the user, based on the deduction information extracted from the extraction processing unit 15C and the settlement information on a settlement amount information received from the communication processing unit 14C, upon receipt of the settlement information.

The funded pension registration unit 18 is the means for having the function to register the funded pension information on the funded pension amount calculated in the settlement amount processing unit 17C, to the funded pension information DB 21, based on the user ID included in the settlement information received from the communication processing unit 14C.

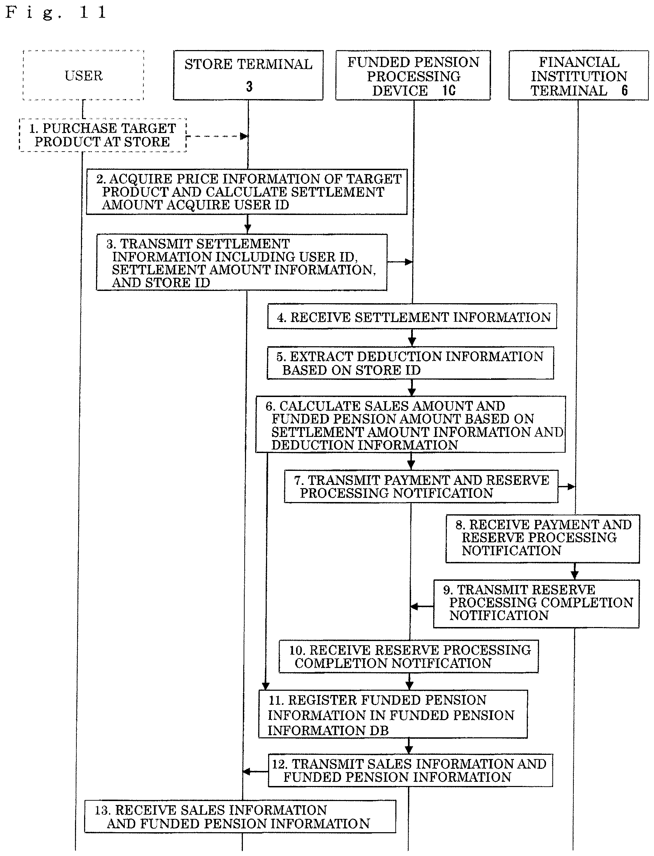

Next, with the reference to Fig. 11, description is given of a flow of processing in a funded pension processing system for implementing a funded pension processing method according to the third embodiment of the present invention (hereinafter referred to as the "third method").

Note that the third funded pension processing device 1C of the present invention realizes the third method described below by executing the third computer program.

First, the user takes a deduction target product that is to be purchased to a cashier in a store (1).

Then, the store terminal 3 acquires the price information of the product and calculates the settlement amount (2).

The store terminal 3 further acquires the user ID for identifying the user who purchases the product (2).

Subsequently, the store terminal 3 transmits the settlement information including the user ID, the settlement amount information, and the store ID to the funded pension processing device 1C (3).

Next, the funded pension processing device 1C receives the settlement information transmitted by the store terminal 3 (4).

Then, the funded pension processing device 1C extracts the deduction information registered in association therewith; by referring to the deduction information DB 22C based on the store ID included in the settlement information, upon receipt of the settlement information (5).

Subsequently, the funded pension processing device 1C calculates a sales amount of the store and a funded pension amount for the user, based on the settlement amount information included in the settlement information and the extracted deduction information (6).

Then, the funded pension processing device 1C registers the funded pension information on the calculated funded pension amount to the funded pension information DB 21, based on the user ID included in the settlement information (11).

Also, when the funded pension processing device 1C according to the present invention is configured to be able to communicate through a network with a financial institution terminal 6 that executes the process on a settlement of the settlement amount, a reserve processing notification may be transmitted to the financial institution terminal 6 after calculation of the sales amount of the store and the funded pension amount for the user (7).

The reserve processing notification includes a reserve processing request which requests a funded pension to be reserved for the user, together with the store ID for identifying the store that has sold the product, the user ID, and the funded pension information on the funded pension amount.

The financial institution terminal 6 receives the reserve processing notification transmitted by the funded pension processing device 1C (8).

After the reserve processing of the funded pension is completed for the user by the financial institution, the financial institution terminal 6 transmits a reserve processing completion notification to the funded pension processing device 1C (9).

Note that the reserve processing of the funded pension for the user in the financial institution is performed same as the first method described above.

The funded pension processing device 1C receives the reserve processing completion notification transmitted by the financial institution terminal 6 (10).

Then, the funded pension processing device 1C registers the funded pension information on the funded pension amount to the funded pension information DB21, based on the user ID included in the settlement information (11).

Subsequently, the funded pension processing device 1C transmits sales information on the sales amount of the store and funded pension information on the funded pension amount for the user to the store terminal 3 (12).

Then, the store terminal 3 receives the sales information and the funded pension information transmitted by the funded pension processing device 1C (13).

Thus, the funded pension processing device 1C according to the present invention can execute the processing of reserving a part of the settlement amount associated with the purchase of the product by the user.

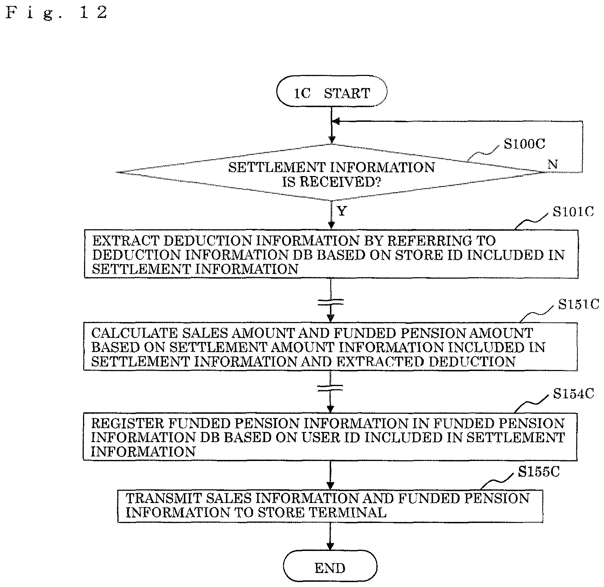

Subsequently, with reference to Fig. 12, description of an example of operations of the funded pension processing device 1C executing the third method described above is given.

First, the communication processing unit 14C determines whether or not the settlement information is received, including the user ID for identifying the user who has purchased the product, settlement amount information on the purchase of the product by the user, and the store ID for identifying the store that has sold the product (S100C).

As a result, when the communication processing unit 14C has determined that the settlement information is received (Y), the extraction processing unit 15C extracts the deduction information registered in association therewith; by referring to the deduction information DB 22C, based on the store ID included in the settlement information received from the communication processing unit 14C (S101C).

On the other hand, when the communication processing unit 14C has determined that the settlement information is not received (N), the communication processing unit 14C repeats the determination of whether or not the settlement information is received (S100C).

Moreover, the settlement amount processing unit 17C calculates a sales amount of the store and a funded pension amount for the user, based on the deduction information extracted from the extraction processing unit 15C and the settlement amount information included in the settlement information received from the communication processing unit 14C (S151C).

Subsequently, the funded pension registration unit 18 registers the funded pension information on the funded pension amount calculated in the settlement amount processing unit 17C to the funded pension information DB 21, based on the user ID included in the settlement information received from the communication processing unit 14C (S154C).

Then, the communication processing unit 14C transmits sales information on the sales amount and the funded pension information on the funded pension amount calculated in the settlement amount processing unit 17C to the store terminal 3 (S155C).

Thus, a series of operations of the third funded pension processing device 1C are completed (end).

### Embodiment 4

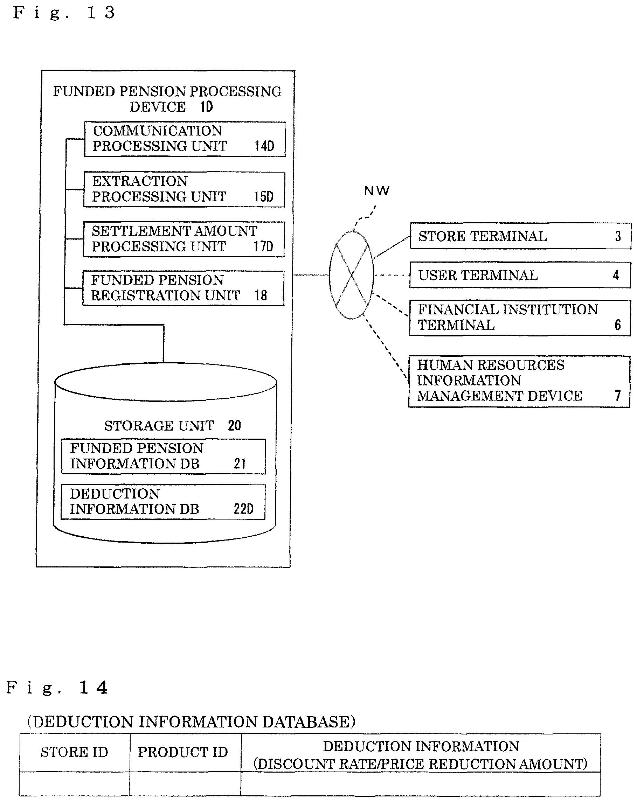

Next, Fig. 13 shows a configuration of the fourth funded pension processing device 1D of the present invention.

The fourth funded pension processing device 1D of the present invention is different from the first funded pension processing device 1A described above in being configured to be able to communicate through a network NW with a store terminal 3. Also, the fourth funded pension processing device 1D of the present invention is different from the second funded pension processing device 1B described above in excluding the deduction information in the settlement information received from a store terminal 3. Furthermore, the fourth funded pension processing device 1D of the present invention is different from the third funded pension processing device 1C described above in being included the product identification information (hereinafter stated as the "product ID") for identifying the product in the settlement information received from a store terminal 3.

The fourth funded pension processing device 1D of the present invention is realized by a so-called server computer. As Fig. 13 describes, the storage unit 20 is configured by including a funded pension information DB 21 and a deduction information DB 22D, together with a communication processing unit 14D, an extraction processing unit 15D, a settlement amount processing unit 17D, and a funded pension registration unit 18.

The deduction information DB 22D is the means for storing the deduction information set by each store selling products to support the user. Thus, as Fig. 14 describes, the deduction information DB 22D stores the deduction information, in association with the product ID for identifying the product and the store ID for identifying the store selling products.

The communication processing unit 14D is the means for having the function to receive the settlement information including the product ID for identifying the product and the store ID for identifying the store that has sold the product, the settlement amount information on the product purchase by the user, and the user ID for identifying the user who has purchased the product, from the store terminal 3. Thus, the communication processing unit 14D functions as settlement information reception means.

The communication processing unit 14D also has the function to transmit the sales information on a sales amount and the funded pension information on a funded pension amount, which are calculated in the settlement amount processing unit 17D, to the store terminal 3, and it also functions as processing information transmitting means.

The extraction processing unit 15D has the function to extract the deduction information registered in association therewith; by referring the deduction information DB 22D, based on the store ID and the product ID, included in the settlement information received from the communication processing unit 14D.

Therefore, the extraction processing unit 15D functions as the deduction information extraction means.

The settlement amount processing unit 17D is the means of calculating a sales amount of the store and a funded pension amount for the user, based on the deduction information extracted by the extraction processing unit 15D and the settlement amount information included in the settlement information received from the communication processing unit 14D, upon receipt of the settlement information.

The funded pension registration unit 18 is the means for having the function to register the funded pension information on the funded pension amount calculated by the settlement amount processing unit 17D to the funded pension information DB 21, based on the user ID included in the settlement information received from the communication processing unit 14 D.

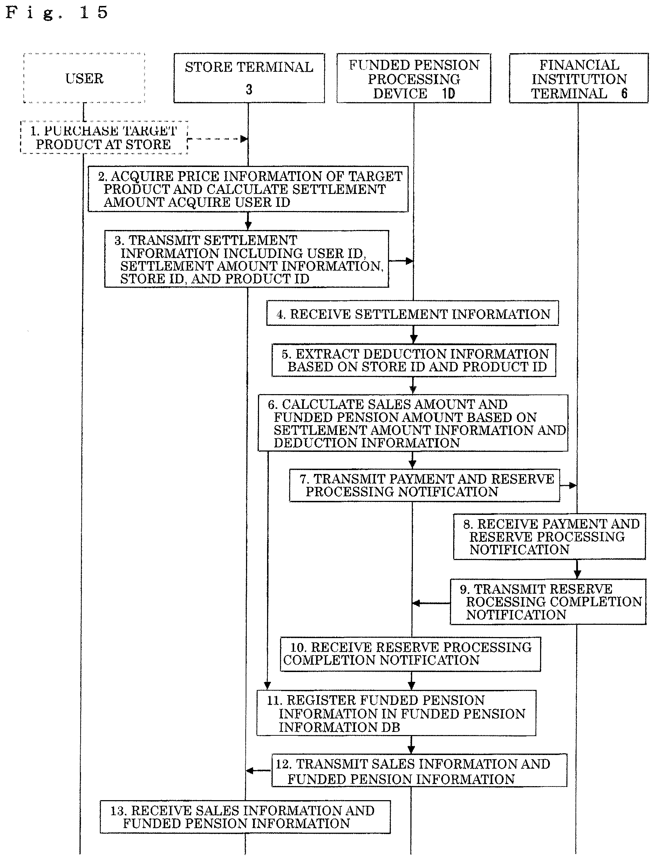

Next, with reference to Fig. 15, description is given of a flow of processing in a funded pension processing system for implementing a funded pension processing method according to the fourth embodiment of the present invention (hereinafter referred to as the "fourth method").

Note that the fourth funded pension processing device 1D of the present invention realizes the fourth method described below by executing the fourth computer program.

First, the user takes a deduction target product to purchase to a cashier in a store (1).

Then, the store terminal 3 acquires a price information and a product ID of the product and calculates a settlement amount (2). Also, the store terminal 3 acquires the user ID for identifying the user who purchases the product (2).

Subsequently, the store terminal 3 transmits the settlement information, including a user ID, a settlement amount information, a store ID and a product ID to the funded pension processing unit 1D (3).

Next, the funded pension processing device 1D receives the settlement information transmitted by the store terminal 3 (4).

Then, the funded pension processing device 1D extracts the deduction information registered in association therewith; by referring to the deduction information DB 22D, based on the store ID and the product ID included in the settlement information upon receipt of the settlement information (5).

Thereafter, the funded pension processing device 1D calculates a sales amount of the store and a funded pension amount for the user, based on the settlement amount information included in the settlement information and the extracted deduction information.

Then, the funded pension processing device 1D registers the funded pension information on the funded pension amount calculated based on the user ID, included in the settlement information to the funded pension information DB 21.

Also, when the funded pension processing device 1D according to the present invention is configured to be able to communicate through a network with a financial institution terminal 6 that executes the processing for settlement of the settlement amount, a reserve processing notification may be transmitted to the financial institution terminal 6 after the calculation of the sales amount of the store and the funded pension amount for the user (7).

The reserve processing notification includes a reserve processing request to request a funded pension to be reserved for the user, together with the store ID for identifying the store that has sold the product, the user ID, and the funded pension information on the funded pension amount.

The financial institution terminal 6 receives the reserve processing notification transmitted by the funded pension processing device 1D (8).

After the reserve processing of the funded pension is completed for the user by the financial institution, the financial institution terminal 6 transmits a reserve processing completion notification to the funded pension processing device 1D (9).

Note that the reserve processing of the funded pension for the user by the financial institution is performed in the same manner as that in the first method described above.

The funded pension processing device 1D receives a reserve processing completion notification transmitted by the financial institution terminal 6 (10).

Then, the funded pension processing device 1D registers the funded pension information on the funded pension amount to the funded pension information DB 21, based on the user ID, included in the settlement information (11).

Subsequently, the funded pension processing device 1D transmits a sales information on the sales amount of the store and funded pension information on the funded pension amount for the user to the store terminal 3 (12).

Then, the store terminal 3 receives the sales information and the funded pension information transmitted by the funded pension processing device 1D (13).

Thus, the funded pension processing device 1D according to the present invention can execute the processing of reserving a part of the settlement amount associated with the purchase of the product by the user.

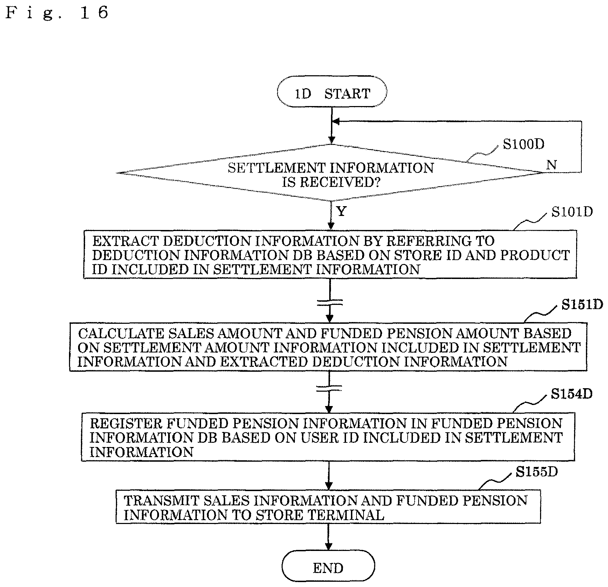

Next, with reference to Fig. 16, description is given of an example of operations of the funded pension processing device 1D that executes the fourth method described above.

First, the communication processing unit 14D determines whether or not settlement information is received, including a user ID for identifying the user who has purchased the product, a settlement amount information on the purchase of the product by the user, and a store ID for identifying the store that has sold the product, and a product ID for identifying the product (S100D).

As a result, when the communication processing unit 14D has determined that the settlement information is received (Y), the extraction processing unit 15D extracts the deduction information registered in association therewith; by referring the deduction information DB 22D based on the store ID and the product ID included in the settlement information received from the communication processing unit 14D.

On the other hand, when the communication processing unit 14D has determined that settlement information is not received (N), the communication processing unit 14D repeats whether or not the settlement information is received (S100D).

Also, the settlement amount processing unit 17D calculates a sales amount of the store and a funded pension amount for the user, based on the deduction information extracted by the extraction processing unit 15D and the settlement amount information included in the settlement information received from the communication processing unit 14D (S151D).

Subsequently, the funded pension registration unit 18 registers the funded pension information on the funded pension amount calculated by the settlement amount processing unit 17D, based on the user ID included in the settlement information received by the communication processing unit 14D to the funded pension information DB 21 (S154D).

Then, the communication processing unit 14D transmits sales information on the sales amount and the funded pension information on the funded pension amount calculated by the settlement amount processing unit 17D to the store terminal 3 (S155D).

Thus, a series of operations of the fourth funded pension processing device 1D are completed (end).

### Embodiment 5

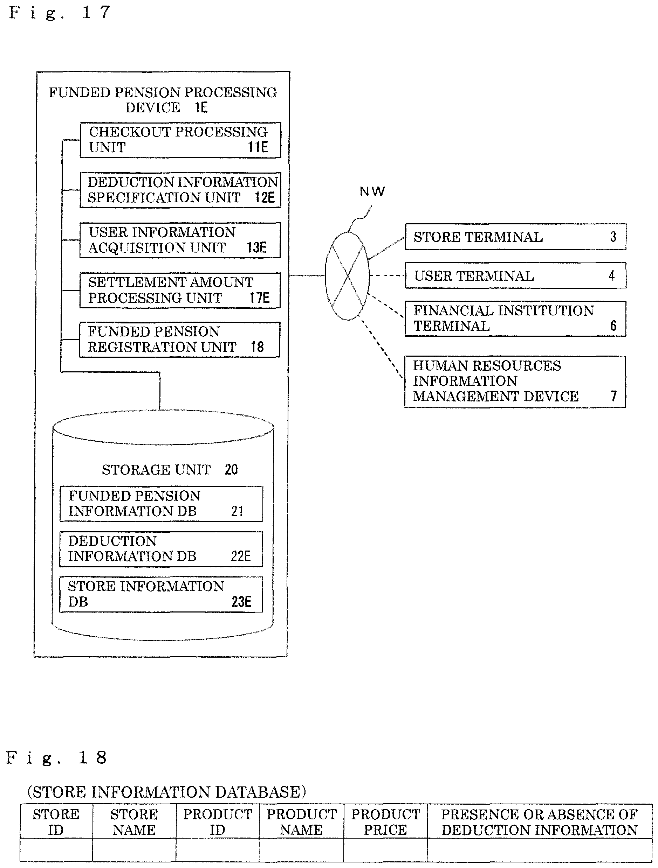

Next, Fig. 17 shows a configuration of the the fifth funded pension processing device 1E of present invention.

The fifth funded pension processing device 1E of the present invention is different from the first funded pension processing device 1A, described above in being configured to be able to communicate through a network NW with a store terminal 3. Also, the fifth funded pension processing device 1E of the present invention is different from the second or fourth funded pension processing device 1B, 1C, and 1D described above in providing a cloud computing service by being configured on cloud computing base.

The fifth funded pension processing device 1E of the present invention is realized by a so-called server computer or the like. As Fig. 17 describes, the storage unit 20 is configured by including a funded pension information DB 21, a deduction information DB 22E, and a store information database (hereinafter abbreviated as the "store information DB") 23E, together with a checkout processing unit 11E, a deduction information identification unit 12E, a user information acquisition unit 13E, a settlement amount processing unit 17E, a funded pension registration unit 18.

The store information DB 23E is the means for storing in association therewith; the product ID for identifying the product, the price information of the product, and the information whether or not the deduction information is set by each store. Thus, the store information DB 23E stores the information such as the product price associated with the product ID, the product name, Price Look Up (PLU) by each store and whether or not the deduction information is set as shown in Fig. 18.

Also, the store information DB 23E may store contact information of each store such as a store name, address, telephone number and email address. Here, to verify whether or not the deduction information is set, for instance, the flag can show "1" which indicates that the deduction information is set or "0" which indicates that the deduction is not set.

The checkout processing unit 11E, according to the purchase of the product by the user, is the means for having the function to calculate the settlement amount by acquiring the store ID for identifying the store that has sold the product and the product ID for identifying the product through the store terminal 3, referring to the store information DB 23E, and identifying the price information based on the acquired store ID and the product ID. Thus, the store ID can be acquired by login when using the service, and the product ID can be acquired by reading with a bar-code scanner a one-dimensional bar code such as a JAN code, an EAN code, a UPC attached to the product or a two-dimensional bar code such as a QR code, a data matrix, and a MaxiCode.

Also, in this embodiment, via the store terminal 3 is meant for using an entry key, an entry button, a barcode scanner, a card reader writer and the like, equipped in a store terminal 3.

Also, The checkout processing unit 11E also has the function to verify whether or not the deduction information is set by each store, based on the acquired store ID and the product ID by referring to the store information DB 23E. Thus, the checkout processing unit 11E verifies whether the flag registered to the store information DB 23E is "1" which indicates that the deduction information is set or "0" which indicates that the deduction information is not set.

The deduction information acquisition unit 12E is the means for having the function to identify the deduction information based on the store ID and the product ID by referring to the deduction information DB 22E when the deduction information acquisition unit 12E verifies that the deduction information is set in the checkout processing unit 11E. Note that the deduction information DB 22E stores the the deduction information associated with the product ID for identifying the product and the store ID for identifying the store selling products as shown in Fig. 14.

The user information acquisition unit 13E is the means for having the function to acquire the user ID for identifying the user who purchases the product.

The user ID is a settlement card information, a mobile information, and a membership card information as described above and can be acquired by using a credit card/electronic money processing function or a client management function of a store terminal 3. Thus, the user ID can be acquired by a card reader/writer built in (or connected to) a store terminal 3.

The settlement amount processing unit 17E is the means for having the function to calculate a sales amount and a funded pension amount, based on the settlement amount information on the settlement amount calculated by the checkout processing unit 11E and the deduction information identified by the deduction information acquisition unit 12E upon the acquisition of payment information.

In this event, the payment information can be information that can recognize the pressing of a cash selling/deposit key, a credit selling key, a ticket selling key or the like at the store terminal 3.

Moreover, the funded pension processing device 1E according to the present invention has the credit card/electronic money processing function, so as to be able to support a credit card, a debit card, a prepaid card, electronic money and the like, as well as cash for payment at a cashier.

The funded pension registration unit 18 is the means for having the function to register the funded pension information on the funded pension amount calculated by the settlement amount processing unit 17E to the funded pension information DB 21, based on the user ID acquired by the user information acquisition unit 13E.

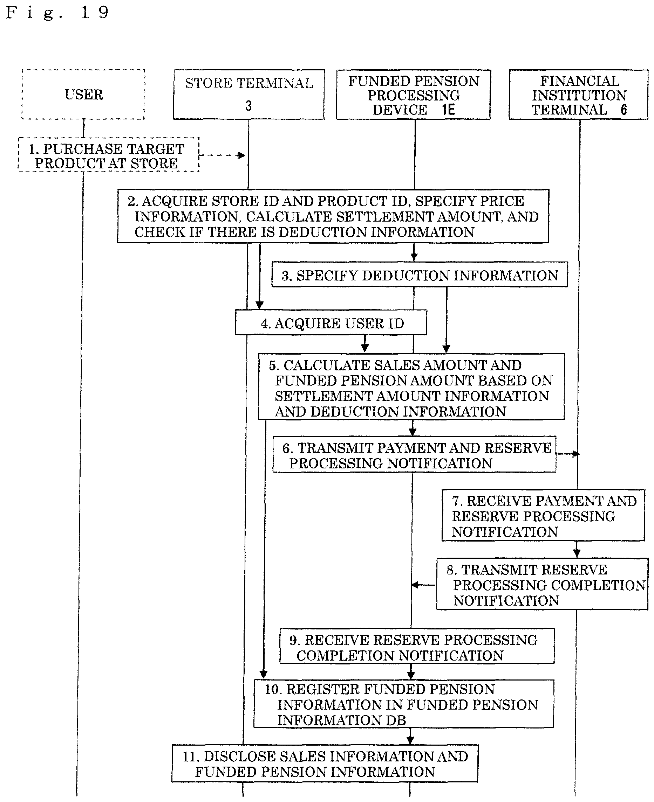

Next, with reference to Fig. 19, description is given of a flow of processing in the funded pension processing system for implementing the funded pension processing method according to the fifth embodiment of the present invention (hereinafter referred to as the "fifth method").

Note that the fifth funded pension processing device 1E of the present invention realizes the fifth method described below by executing the fifth computer program.

First, in order to receive a funded pension service, the user registers for the service in advance or at the time of the purchase of the target product that is applicable for the funded pension service.

Also, the user installs the application for using the funded pension service to associate with the cloud computing in the store terminal 3. Also, the user logs in with the store ID and password in the store terminal 3.

Next, the user takes a deduction target product to purchase to a cashier in a store (1).

Then, the funded pension processing device 1E that is configured to be able to communicate with a store terminal 3 through the network acquires the store ID for identifying the store that has sold the product and the product ID for identifying the product through the store terminal 3 (2). Thus, the store ID can be acquired (identified) by the login information, and the product ID can be acquired by reading a barcode with a bar-code scanner.

The funded pension processing device 1E further calculates the settlement amount, by referring to the store information DB 23E and identifying the price information based on the acquired store ID and the product ID (2).

Subsequently, the funded pension processing device 1E verifies whether or not the deduction information is set by each store based on the acquired store ID and product ID by referring to the store information DB 23E (2).

Also, the funded pension processing device 1E identifies the deduction information based on the acquired store ID and product ID by referring to the deduction information DB 22E when the funded pension processing device 1E verifies that the deduction information is set (3).

Furthermore, the funded pension processing device 1E acquires the user ID for identifying the user who has purchased the product through the store terminal 3.

Subsequently, the funded pension processing device 1E calculates a sales amount of the store and a funded pension amount for the user, based on the settlement amount information regarding to the calculated settlement amount and the acquired deduction information upon acquisition of payment information (5).

Then, the funded pension processing device 1E registers the funded pension information on the funded pension amount calculated based on the acquired user ID to the funded pension information DB 21 (10).

Also, when the funded pension processing device 1E according to the present invention is configured to be able to communicate through a network with a financial institution terminal 6 that executes processing for settlement of the settlement amount, a reserve processing notification may be transmitted to the financial institution terminal 6 after the calculation of the sales amount of the store and the funded pension amount for the user (6).

The reserve processing notification includes a reserve processing request to request the funded pension to be reserved for the user, together with the store ID for identifying the store that has sold the product, the user ID, and the funded pension information on the funded pension amount.

The financial institution terminal 6 receives the reserve processing notification transmitted by the funded pension processing device 1E (7).

After the completion of the reserve processing of the funded pension for the user by the financial institution, the financial institution terminal 6 transmits a reserve processing completion notification to the funded pension processing device 1E (8).

Note that the reserve processing of the funded pension for the user by the financial institution is performed in the same manner as that in the first method described above.

The funded pension processing device 1E receives a reserve processing completion notification transmitted by the financial institution terminal 6 (9).

Then, the funded pension processing device 1E registers the funded pension information on the funded pension amount based on the acquired user ID to the funded pension information DB 21 (10).

The funded pension processing device 1E further discloses and enables to inspect the sales information on the sales amount of the store and funded pension information on the funded pension amount of the user, upon receipt of the request from the store terminal 3 (11) .

Thus, the funded pension processing device 1E according to the present invention can execute the processing of reserving a part of the settlement amount associated with the purchase of the product by the user.

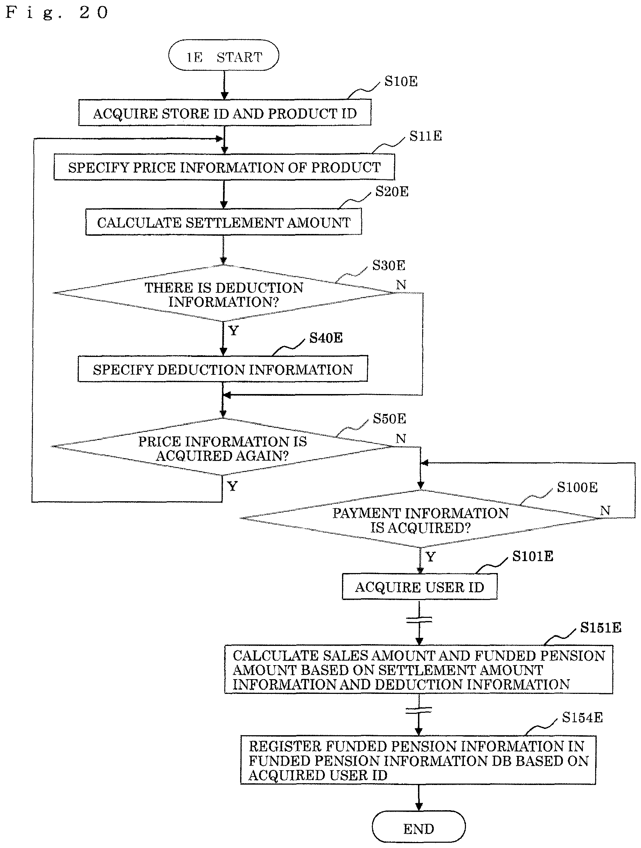

Next, with reference to Fig. 20, description is given of an example of operations of the funded pension processing device 1E that executes the fifth method described above.

First, the checkout processing unit 11E acquires the store ID and product ID (S10E).

Then, the checkout processing unit 11E identifies the price information based on the acquired store ID and the product ID (S11E) .

Subsequently, the checkout processing unit 11E calculates the settlement amount (S20E).

Also, the checkout processing unit 11E confirms whether or not the deduction information is set for the product (S30E).

As a result, when the checkout processing unit 11E confirms that the deduction information is set (Y), the deduction information acquisition unit 12E identifies the deduction information based on the acquired store ID and product ID (S40E).

Subsequently, the checkout processing unit 11E determines whether or not the store ID and product ID are acquired again (S50E) .

As a result, when the checkout processing unit 11E has determined that the store ID and product ID are acquired again (Y), the checkout processing unit 11E identifies the price information based on the acquired store ID and product ID (S11E). Thereafter, the above-described procedure is repeated.

On the other hand, when the checkout processing unit 11E has determined that the store ID and product ID is not acquired again (N), then the settlement amount processing unit 17E determines whether or not payment information is acquired (S100E).

As a result, when the settlement amount processing unit 17E has determined that the payment information is acquired (Y), the user information acquisition unit 13E acquires the user ID for identifying the user who purchases the product (101E).

On the other hand, when the settlement amount processing unit 17E has determined that payment information is not acquired (N), the settlement amount processing unit 17E repeats the determination of whether or not the payment information is acquired (S100E).

Note that the acquisition of the user ID by the user information acquisition unit 13E may be performed before the settlement amount processing unit 17E acquires the payment information.

Also, upon acquisition of the payment information by the settlement amount processing unit 17E, the settlement amount processing unit 17E further calculates the sales amount of the store and the funded pension amount for the user, based on the settlement amount information on the settlement amount calculated by the checkout processing unit 11E and the deduction information identified by the deduction information acquisition unit 12E (S151E).

Then, the funded pension registration unit 18 registers the funded pension information on the funded pension amount calculated by the settlement amount processing unit 17E to the funded pension information DB 21, based on the user ID acquired by the user information acquisition unit 13E (S154E).

Thus, a series of operations of the fifth funded pension processing device 1E are completed (end).

### Embodiment 6

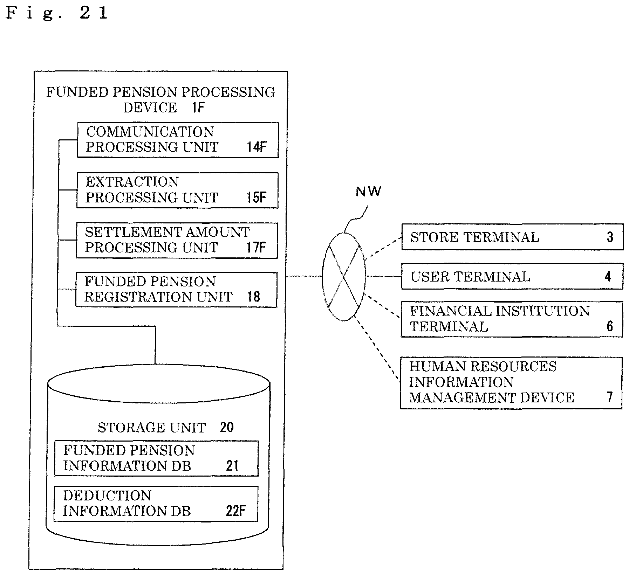

Next, Fig. 21 shows a configuration of a sixth funded pension processing device 1F of the present invention.

The sixth funded pension processing device 1F of the present invention is different from the first to the fifth funded pension processing device 1A, 1B, 1C, 1D, and 1E described above in being configured to be able to communicate through a network NW with a user terminal 4.

The sixth funded pension processing device 1F of the present invention is realized by a so-called server computer or the like. As Fig. 21 describes, the storage unit 20 is configured by having a funded pension information DB 21 and the deduction information DB 22F, together with the communication processing unit 14F, the extraction processing unit 15F, the settlement amount processing unit 17F, and the funded pension registration unit 18.

The user terminal 4 is a terminal used by a user who obtains a funded pension by receiving a funded pension service and purchasing a target product that is applicable for the funded pension service.

The user terminal 4 is realized by a terminal that can transmit and receive data and acquire data via a network NW such as a so-called personal computer, tablet terminal, smartphone, mobile phone and the like.

The deduction information DB 22F is the means for storing the deduction information set by each store selling products to support the user. Thus, the deduction information DB 22F stores the deduction information associated with the store ID for identifying the store selling products as shown in Fig. 10.

The communication processing unit 14F is the means for having the function to receive the settlement information including the store ID for identifying the store that has sold the product, the settlement amount information on the purchase of the product by the user, and the user ID for identifying the user who has purchased the product through the user terminal 4. Thus, the communication processing unit 14F functions to receive the settlement information.

Also, the communication processing unit 14F has the function for transmitting a sales information on the sales amount and a funded pension information on the funded pension amount calculated by the settlement amount processing unit 17F to the store terminal 3. The communication processing unit 14F also functions as the processing information transmission means.

The extraction processing unit 15F is the means for having the function to extract the deduction information registered in association therewith; by referring to the deduction information DB 22F, based on the store ID included in the settlement information received from the communication processing unit 14F. Thus, the extraction processing unit 15F functions as the deduction information extraction means.

The settlement amount processing unit 17F is the means for calculating a sales amount of the store and a funded pension amount for the user, based on the deduction information extracted by the extraction processing unit 15F and the settlement amount information included in the settlement information received from the communication processing unit 14F, upon receipt of the settlement information.

The funded pension registration unit 18 is the means for having the function to register the funded pension information on the funded pension amount calculated by the settlement amount processing unit 17F based on the user ID included in the settlement information received from the communication processing unit 14F to the funded pension information DB 21.

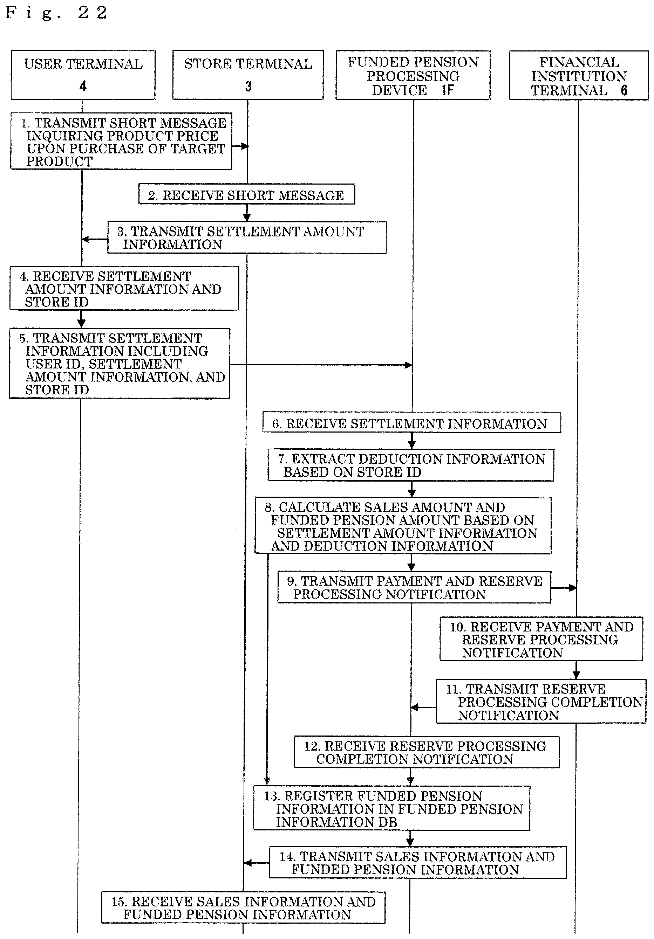

Next, with reference to Fig. 22, description is given of a flow of processing in a funded pension processing system for implementing a funded pension processing method according to the sixth embodiment of the present invention (hereinafter referred to as the "sixth method").

Note that the sixth funded pension processing device 1F of the present invention realizes the sixth method described below by executing the sixth computer program.

First, when a user purchases a product at a store, the user activates the application software for using the funded pension service at the user terminal 4 and logs in by inputting the ID and a password.

Subsequently, in accordance with the purchase of the target product, a telephone number of the store is input, and a short message (for example, short mail, C mail, or the like) for inquiring the product price together with the product ID are transmitted to the shop terminal 3. (1)

On the other hand, the store terminal 3 receives the short message transmitted by the user terminal 4 (2). The store terminal 3 transmits the settlement amount information on the product price to the user terminal 4 (3).

Subsequently, the user terminal 4 receives the settlement amount information transmitted by the store terminal 3 (4).

Then, the user terminal 4 transmits the settlement information, including the user ID, the settlement amount information, and the store ID to the funded pension processing device 1F (5). Thus, when the user satisfies the amount indicated in the settlement price information transmitted by the shop terminal 3, the user presses the OK button, whereby the settlement information is transmitted by the user terminal 4 to the reserved pension processing device 1F.

Next, the funded pension processing device 1F receives the settlement information transmitted by the user terminal 4 (6).

Then, the funded pension processing device 1F extracts the deduction information registered in association therewith; by referring to the deduction information DB 22E based on the store ID included in the received settlement information upon receipt of settlement information (7).

Thereafter, the funded pension processing device 1F calculates a sales amount of the store and a funded pension amount for the user, based on the settlement amount information included in the settlement information and the extracted deduction information (8).

Then, the funded pension processing device 1F registers the funded pension information on the funded pension amount calculated, based on the user ID included in the settlement information to the funded pension information DB 21 (13).

Also, when the funded pension processing device 1F according to the present invention is configured to be able to communicate through a network with a financial institution terminal 6 that executes processing for settlement of the settlement amount, a reserve processing notification may be transmitted to the financial institution terminal 6 after the calculation of the sales amount of the store and the funded pension amount for the user (9).

The funded processing notification includes a reserve processing request to request the funded pension to be reserved for the user, together with the store ID for identifying the store that has sold the product, the user ID, and the funded pension information on the funded pension amount.

The financial institution terminal 6 receives the reserve processing notification transmitted by the funded pension processing device 1F (10).

After the completion of the reserve processing of the funded pension for the user by the financial institution, the financial institution terminal 6 transmits a reserve processing completion notification to the funded pension processing device 1F (11).

Note that the reserve processing of the funded pension for the user by the financial institution is performed in the same manner as that in the first method described above.

The funded pension processing device 1F receives the funded processing completion notification transmitted by the financial institution terminal 6 (12).

Thereafter, the funded pension processing device 1F registers the funded pension information on the funded pension amount, based on the user ID included in the settlement information to the funded pension information DB 21 (13).

The funded pension processing device 1F further transmits sales information on the sales amount of the store and funded pension information on the funded pension amount for the user to the store terminal 3 (14).

Then, the store terminal 3 receives the sales information and the funded pension information transmitted by the funded pension processing device 1F (15).

Thus, the funded pension processing device 1F according to the present invention can execute the processing of reserving a part of the settlement amount associated with the purchase of the product by the user.

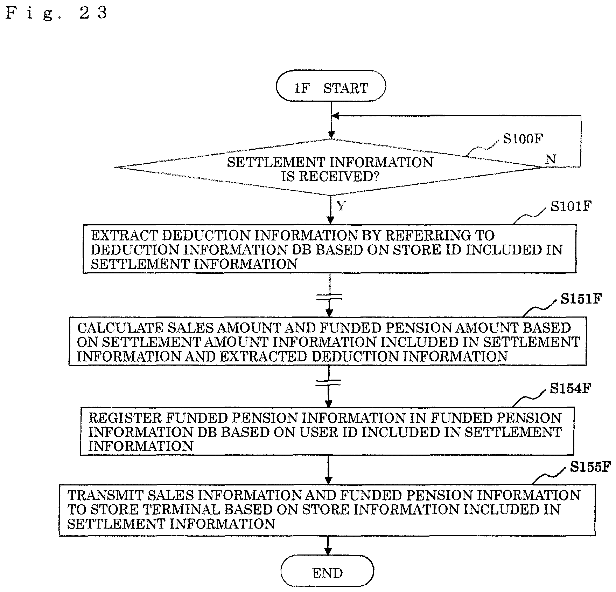

Next, with reference to Fig. 23, description is given of an example of operations of the funded pension processing device 1F that executes the sixth method described above.

First, the communication processing unit 14F determines whether or not the settlement information is received, including the user ID for identifying the user who has purchased the product, the settlement amount information on the purchase of the product by the user, and the store ID for identifying the store that has sold the product (S100F).

As a result, when the communication processing unit 14F has determined that the settlement information is received (Y), the extraction processing unit 15F extracts the deduction information registered in association therewith; by referring to the deduction information DB 22F, based on the store ID included in the settlement information received from the communication processing unit 14F (S101F).

On the other hand, when the communication processing unit 14F has determined that the settlement information is not received (N), the communication processing unit 14F repeats the determination of whether or not the settlement information is received (S100F).

Also, the settlement amount processing unit 17F calculates a sales amount of the store and a funded pension amount for the user, based on the deduction information extracted by the extraction processing unit 15F and the settlement amount information included in the settlement information received from the communication processing unit 14F (S151F).

Thereafter, the funded pension registration unit 18 registers the funded pension information on the funded pension amount calculated by the settlement amount processing unit 17F, based on the user ID included in the settlement information received from the communication processing unit 14F to the funded pension information DB 21 (S154F).

Then, the communication processing unit 14F transmits the sales information on the sales amount and the funded pension information on the funded pension amount calculated by the settlement amount processing unit 17F to the store terminal 3 (S155E).

Thus, a series of operations of the sixth funded pension processing device 1F are completed (end).

### Embodiment 7

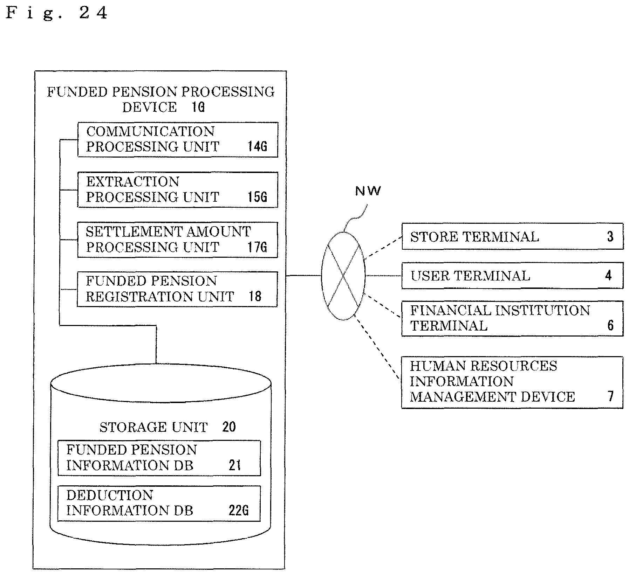

Next, Fig. 24 shows a configuration of the seventh funded pension processing device 1G of present invention.

The seventh funded pension processing device 1G of the present invention is different from the first to the fifth funded pension processing device 1A, 1B, 1C, 1D, and 1E described above in being configured to be able to communicate with a user terminal 4 through a network NW. Also, the seventh funded pension processing device 1G of the present invention is different from the sixth funded pension processing device 1F described above in being included the product ID for identifying the product in the settlement information received from the user terminal 4.

The seventh funded pension processing device 1G of the present invention is realized by a so-called server computer and the like. As Fig. 20 describes, the storage unit 20 is configured by having the funded pension information DB 21 and the deduction information DB 22G together with the communication processing unit 14G, the extraction processing unit 15G, the settlement amount processing unit 17G, and the funded pension registration unit 18.

The deduction information DB22G is the means for storing by each product the deduction information set by each store selling products to support the user. Thus, the deduction information DB 22G stores the deduction information in association with the store ID for identifying the store who has sold the product and product ID for identifying the product as shown in Fig. 14.

The communication processing unit 14G is the means for having the function to receive the user ID for identifying the user who has purchased the product, the settlement amount information on the purchase of the product by the user, the store ID for identifying the store that has sold the product, and the product ID for identifying the purchased product from the user terminal 4. In other words, the communication processing unit 14G functions as settlement information reception means.

Also, the communication processing unit 14G has the function to transmit sales information on the sales amount and funded pension information on the funded pension amount calculated by the settlement amount processing unit 17G to the store terminal 3. Therefore, the communication processing unit 14G also functions as processing information transmission means.

The extraction processing unit 15G is the means for having the function to extract the deduction information registered in association therewith; by referring to the deduction information DB 22G based on the store ID and the product ID included in the settlement information received from the communication processing unit 14G. Therefore, the extraction processing unit 15G functions as deduction information extraction means.

The settlement amount processing unit 17G is the means for calculating a sales amount of the store and a funded pension amount for the user, based on the settlement amount information included in the settlement information received from the communication processing unit 14G and the deduction information extracted by the extraction processing unit 15G, upon receipt of the settlement information.

The funded pension registration unit 18 is the means for having the function to register the funded pension information on the funded pension amount calculated by the settlement amount processing unit 17G based on the user ID included in the settlement information received from the communication processing unit 14G to the funded pension information DB 21.

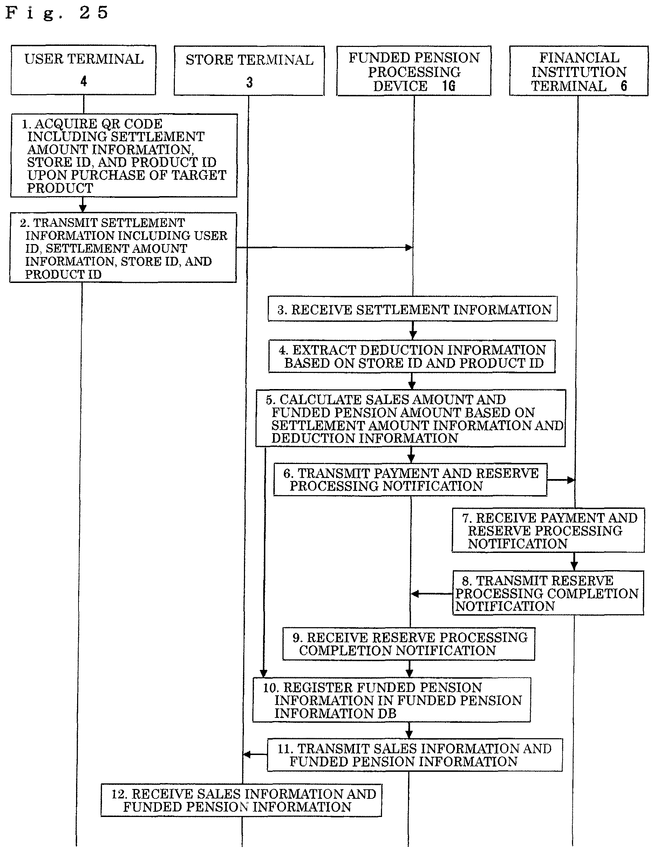

Next, with reference to Fig. 25, description is given of a flow of processing in a funded pension processing system for implementing a funded pension processing method according to the seventh embodiment of the present invention (hereinafter referred to as the "seventh method").

Note that the seventh funded pension processing device 1G of the present invention realizes the seventh method described below by executing the sixth computer program.

First, when the user purchases a product in a store, the user activates the application software for using the funded pension service in the user terminal 4 by logging in with inputting the ID and a password.

Next, when the user purchases the target product, the user acquires the store ID and product ID attached with a catalog and product and the QR code that includes the price information through the user terminal 4 (1)

Subsequently, the user terminal 4 transmits the settlement information including the store ID and the product ID, the user ID, and the settlement amount information to the funded pension processing device 1G (2). Thus, after the user acquires the QR code at the user terminal 4, by pressing the purchase button, the settlement information is transmitted to the funded pension processing device 1G from the user terminal 4.

Next, at the funded pension processing device 1G, the communication processing unit 14G receives the settlement information transmitted by the store terminal 4 (3).

Then, the funded pension processing device 1G extracts the deduction information registered in association therewith; by referring to the deduction information DB 22D based on the store ID and the product ID included in the settlement information upon receipt of the settlement information (4).

Thereafter, the funded pension processing device 1G calculates a sales amount of the store and a funded pension amount for the user, based on the settlement amount information included in the settlement information and the extracted deduction information (5).

Then, the funded pension processing device 1G registers the funded pension information on the funded pension amount calculated based on the user ID included in the settlement information to the funded pension information DB 21 (10).

Also, when the funded pension processing device 1G according to the present invention is configured to be able to communicate through a network with a financial institution terminal 6 that executes processing for settlement of the settlement amount, a reserve processing notification may be transmitted to the financial institution terminal 6 after the calculation of the sales amount of the store and the funded pension amount for the user (6).

The reserve processing notification includes a reserve processing request to request the funded pension to be reserved for the user, together with the store ID for identifying the store that has sold the product, the user ID, and the funded pension information on the funded pension amount.

The financial institution terminal 6 receives the reserve processing notification transmitted by the funded pension processing device 1G (7).

After the completion of the reserve processing of the funded pension for the user by the financial institution, the financial institution terminal 6 transmits a reserve processing completion notification to the funded pension processing device 1G (8).

Note that the reserve processing of the funded pension for the user by the financial institution is performed in the same manner as that in the first method described above.

The funded pension processing device 1G receives the reserve processing completion notification transmitted by the financial institution terminal 6 (9).

Then, the funded pension processing device 1G registers the funded pension information on the funded pension amount calculated based on the user ID included in the settlement information (10).

Subsequently, at the funded pension processing device 1G, the communication processing unit 14G, which functions as processing information transmission means, transmits the funded pension information on a funded pension amount of the user and sales information on a sales amount of the store to the store terminal 3 (11) .

Then, the store terminal 3 receives the funded pension information and sales information transmitted by the funded pension processing device 1G (12).

Thus, the funded pension processing device 1G according to the present invention can execute the processing of reserving a part of a settlement amount associated with the purchase of the product by the user.

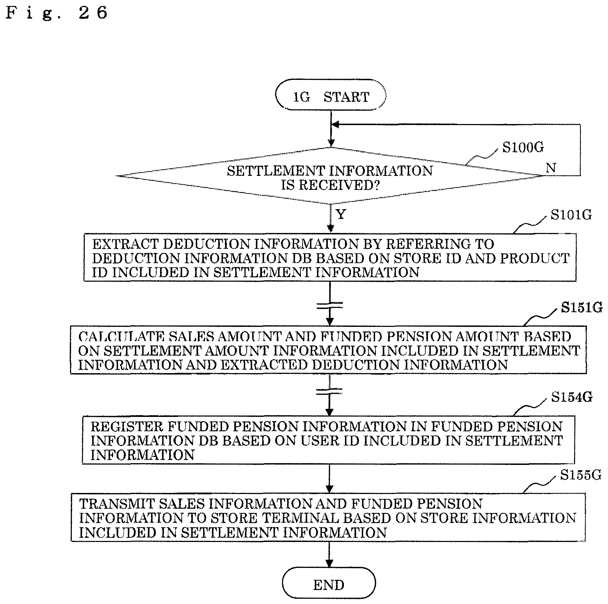

Next, with reference to Fig. 26, description of an example of operations of the funded pension processing device 1G that executes the seventh method described above is given.

First, the communication processing unit 14G determines whether or not the settlement information is received, including the user ID for identifying the user who has purchased the product, the settlement amount information on the purchase of the product by the user, and the store ID for identifying the store that has sold the product (S100G).

As a result, when the communication processing unit 14G has determined that the settlement information is received (Y), the extraction processing unit 15G refers the deduction information DB 22G based on the store ID included in the settlement information received from the communication processing unit 14G and extracts the deduction information registered in association therewith (S101G).

On the other hand, when the communication processing unit 14G has determined that the settlement information is not received (N), the communication processing unit 14G repeats the determination of whether or not the settlement information is received (S100G).

Also, the settlement amount processing unit 17G calculates a sales amount of the store and a funded pension amount for the user, based on the settlement amount information included in the settlement information received from the communication processing unit 14G and the deduction information extracted by the extraction processing unit 15G (S151G).

Subsequently, the funded pension registration unit 18 registers the funded pension information on a funded pension amount calculated by the settlement amount processing unit 17G, based on the user ID included in the settlement information received from the communication processing unit 14G to the funded pension information DB 21 (S154G).

Then, the communication processing unit 14G transmits the sales information on the sales amount and the funded pension information on the funded pension amount calculated by the settlement amount processing unit 17G to the store terminal 3 (S115G).

Thus, a series of operations of the seventh funded pension processing device 1G are completed (end).

Description is given of an example of the main structure and function of the funded pension processing device according to the present invention from the first to the seventh funded pension processing device. This present invention can have additional functions such as having the applicable condition, inspecting the funded pension information, requesting for the inspection of the target product information that is applicable for the funded pension service, and transferring a part of the funded pension, when providing the funded pension service.

Fig. 23 describes the structure of the funded pension processing device 1 according to the present invention, when it provides additional functions.

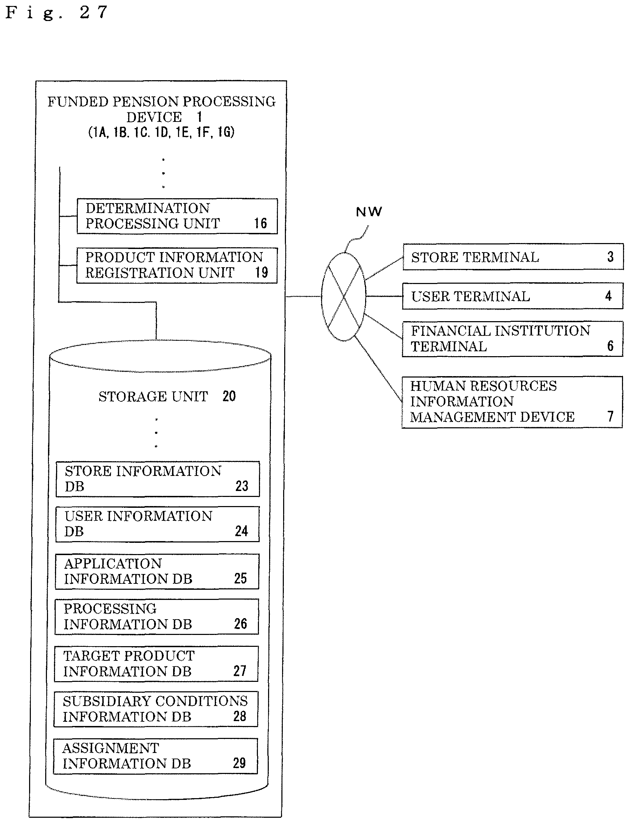

As Fig. 27 describes, according to the present invention, in the funded pension processing device from the first to the seventh 1A, 1B, 1C, 1D, 1E, 1F, and 1G, in addition to the determination extraction unit 16 and the product information registration unit 19, the storage unit 20 can be configured to have the user information DB 24, the applicable information database (hereinafter abbreviated as the "applicable information DB") 25, the processing information database (hereinafter abbreviated as the "processing information DB") 26, the target product information database (hereinafter abbreviated as the "target product information DB") 27, the subsidiary condition information database (hereinafter abbreviated as the "subsidiary condition information DB") 28, and the transfer information database (hereinafter abbreviated as the "transfer information DB") 29 as needed.

### Embodiment 8

First, as the first new function, the funded pension processing device 1 according to the present invention may not be always applicable to provide the funded pension service, but the store can limit the applicable period. In this case, in the funded pension processing device 1, the storage unit 20 further has the store information DB 23, together with the determination processing unit 16.

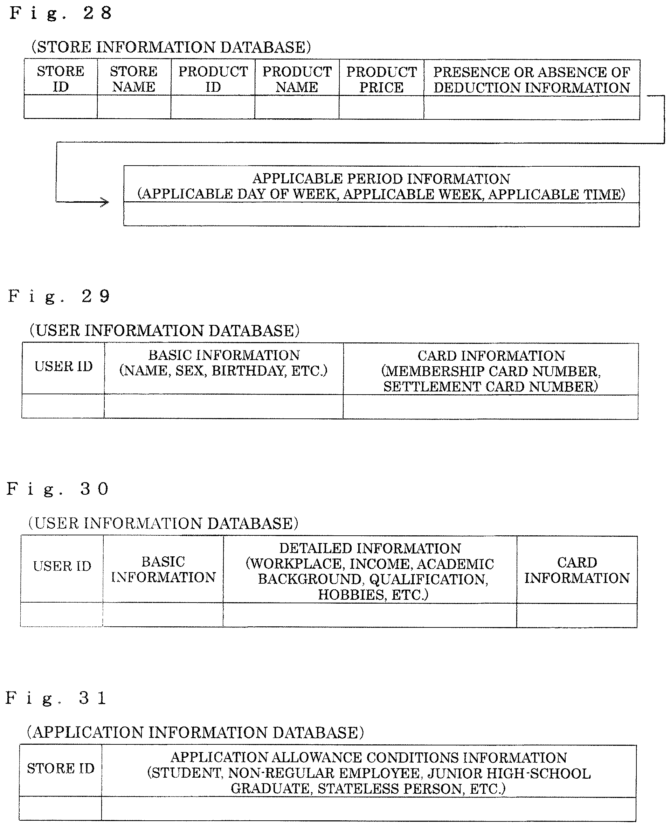

The store information DB 23 is the means for storing further information on the applicable period of the funded pension service. Thus, as Fig. 28 is shown, the store information DB 23 stores the applicable period information such as day, week or time that is applicable to the service in each store. Also, the store information DB 23, the same as the store information DB 23E shown in Fig. 18, may store contact information such as a store name, address, telephone number, and email address.

The determination processing unit 16 of the embodiment is the means for having the function to determine whether or not the date on the product purchase is in the applicable period for the funded pension service, by referring to the store information DB 23 based on the store ID, upon receipt of the settlement information including the store information in the communication processing unit 14 and acquisition of the payment information. Thus, the determination processing unit 16 functions as applicable period determination means.

Also, when the settlement amount processing unit 18 receives the information about the funded pension service in the applicable period from the determination processing unit 16, it functions as calculation of a sales amount and a funded pension amount individually.

Note that according to the present invention, the funded pension processing device can also have the means for having the function for receiving the information on a deduction amount set by the store or the applicable period of the funded pension service and registering to the store information DB 23.

Also, when the funded pension processing device receives the information that the funded pension service is not in the applicable period from the determination processing unit 16, it may transmit the information that the funded pension service is not applicable.

Thereby, it enables to provide the funded pension service not for the entire business hours but can be adjusted to the store's preferred date and time, therefore the store can avoid during the peak time and seasons, which allows the store to provide continuous support without any burden.

### Embodiment 9

Also, as the second new function, the funded pension processing device 1 of the invention may not allow the funded pension service to be applicable to everyone but limit the user. In this case, in the funded pension processing device 1, together with the determination processing unit 16, the storage unit 20 can further have the user information DB 24.

The user DB 24 is the storage unit which stores the information of the user who already registered for the funded pension service. Thus, the user DB 24 is the means for storing the information for identifying the user whether or not the user is applicable for the funded pension service. This user information is the basic personal information, such as the user's name, gender, date of birth, address and contact number, and only the user who satisfies the certain condition is registered.

Also, the card information such as credit card and debit card used for settling a product purchase amount and the membership card issued for the user who registered to receive the funded pension service are registered in this user DB 24. Therefore, as Fig. 29 describes, the user information DB 24 stores the basic personal information and the card information by each user ID.

The determination processing unit 16 of the embodiment is the means for having the function to determine whether or not the user who purchases the product is the application-allowed person who is applicable for the funded pension service, by referring to the user information DB 24 based on the user ID, upon receipt of the settlement information including the user ID in the communication processing unit 14 and acquisition of the payment information. In this case, the determination processing unit 16 functions as application-allowed person determination means.

Also, when the settlement amount processing unit 18 of the embodiment receives the information that the user is the application-allowed person who is applicable for the funded pension service, it also functions as calculation of a sales amount and a funded pension amount.

Thereby, the funded pension service can be provided to not all the users, but for instance, only the users who satisfies the certain criteria, such as only women, people under 20 years old, or the local people who live in the Tohoku region.

### Embodiment 10

Also, as the third new function, the funded pension processing device 1 according to the present invention may not be applicable for everyone to use the funded pension service but limit the user with setting the user criteria of the funded pension service by each store.

In this case, in the funded pension processing device 1, together with the determination processing unit 16, the storage unit 20 further has the user information DB 24 and the application information database (hereinafter abbreviated as the "application information DB") 25.

The user information DB 24 of the embodiment is the means for storing the information for identifying the user who is applicable for the funded pension service and the detailed personal information by each user. This detailed personal information can be the information such as the nationality, the permanent address, the profession, the place of work (name and address), the employment status, income (monthly and annually), academic background, work experience, licenses, the family structure, skills (foreign language speaker), and hobbies. Therefore, as Fig. 30 describes, the user information DB 24, stores the card information for each user ID, together with the basic personal information and the detailed personal information.

Also, the application information DB 25 is the means for storing the information on the applicability criteria of the funded pension service set by the store. The information on the applicability criteria of the funded pension service is, for example, non-regular employees such as part-timers, contract workers, temporary workers, and daily workers, students, junior high school graduates, parents who have pre-schoolers, and single mothers. Therefore, as Fig. 31 describes, the application information DB 25 stores the applicability criteria information by each store ID.

Also, the determination processing unit 16 of the embodiment is the means for having the function to determine whether or not the user who purchases the product satisfies application allowance condition of the funded pension service by referring to the user information DB 24 based on the user ID after extracted the information of the application allowance condition of the funded pension service by referring to the application information DB 25 based on the store ID, upon receipt of the settlement information including the user ID and the store ID in the communication processing unit 14 and acquisition of payment information. In this case, the determination processing unit 16 functions as application-allowed person determination means.

Also, when the settlement amount processing unit 18 of the embodiment receives the information that the user is the application-allowed person who satisfies the application allowance condition for the funded pension service from the determination processing unit 16, it functions as calculation of each a sales amount and a funded pension amount.

Thereby, the funded pension service can be provided by limiting to user who satisfies the application allowance condition that the store wishes to support, rather than every user, such as non-regular employees or employees whose annual income is below 3,000,000 yen, or backpackers.

### Embodiment 11

Also, as the new fourth function, the funded pension processing device 1 according to the present invention may not be applicable for everyone to use the funded pension service but can limit the user based on the human resources information. The function of the embodiment which is associated with the embodiment 9 described above, the user can further be limited with setting the application allowance condition of the funded pension service by each store. In this case, in the funded pension processing device 1, together with the communication processing unit 14 and the determination processing unit 16, the storage unit 20 further has the user information DB 24 and the application information DB 25.

The communication processing unit 14 of the embodiment is the means for having the function to request the inquiry whether or not the user is the application-allowed person who satisfies the application allowance condition of the funded pension service in light of the human resources information, by transmitting the application allowance condition of the funded pension service with the user ID to the human resources information management device 7. In this case, the communication processing unit 14 functions as inquiry request transmission means.

The human resources information management device 7 is the device that has the human resources information storage means which stores the human resources information of the user as a laborer. These human resources information are various information such as business type, job descriptions, position, employment type, holidays, working hours, salary, business trip and its date, time and location, as well as the work evaluation criteria such as work morale, credibility from colleagues, subordinates and superiors.

Moreover, the human resources information management device 7 of the embodiment can have payroll system that calculates the wages, synchronized with time recorder which manages the attendance of workers such as their clock in and out time (this time recorder includes so called an internet time recorder via communication network). Thereby, the payroll information registered to the user information DB 24 can be treated as the objective and reliable information and eliminate the false self-declaration. Also, the wages can be calculated in real time; therefore, the payroll information can be identified corresponding to the optional wage payment methods, such as apart from monthly wages with monthly payment, hourly wages and daily payment, daily wages and daily payment, hourly wages and monthly payment, and daily wages and monthly payment.

Also, the communication processing unit 14 of the embodiment is the means for having the function to receive the response information on inquiry request from the human resources information management device 7. In this case, the communication processing unit 14 functions as response information reception means.

This response information is the information of either the application-allowed person who satisfies the application allowance condition for the funded pension service or not the application-allowed person who satisfies the application allowance condition for the funded pension service. Also, this response information may be registered as the detailed personal information to the user information DB 24, after the response information is received in the communication processing unit 14.

Also, the communication processing unit 14 of the embodiment can request the inquiry to the human resources information management device 7, when the information on the application allowance condition for the funded pension set by the store and registered to the application information DB 25 is not registered to the user information DB 24.

Also, the determination processing unit 16 of the embodiment is the means for having the function to determine whether or not the user who purchases the product is application-allowed person who satisfies the application allowance condition of the funded pension service based on the response information received from the communication processing unit 14. In this case, the determination processing unit 16 functions as application-allowed person determination means.

Thereby, the funded pension service can be provided by further limiting to the user that the store wishes to support based on the human resources information, rather than for every user, such as only the person who obtains A in the work moral evaluation or the person who obtains A for trustworthiness from superiors, subordinates, or colleagues.

Also, because the human resources information management device 7 has the payroll system synchronized with the time recorder, the wages can be calculated in real time not only for full-time workers but also for various employment types, such as hourly wage workers, part timers, temporary workers, and contract workers. Therefore, it enables to identify the user who truly needs a support, such as the person whose salary is below 150,000 yen a month, or the person whose salary is below 5,000 yen a day.

### Embodiment 12

Also, as the new fifth function, the funded pension processing device 1 according to the present invention can notify the funded pension information to the user after a certain period, or regularly.

In this case, in the funded pension processing device 1, together with the communication processing unit 14 and the extraction processing unit 15, the storage unit 20 further has the user information DB 24.

The extraction processing unit 15 of the embodiment is the means for having the function to extract notified party information on the applicable user from the user information DB 24 based on the user ID, together with extracting the funded pension information of each user registered to the funded pension information DB 21, after the elapse of a predetermined period. In this case, the extraction processing unit 15 functions as funded pension information extraction means.

Moreover, the communication processing unit 14 of the embodiment is the means for having the function to transmit the funded pension information extracted by the extraction processing unit 15 to each user based on the notified party information extracted at the same time. In this case, the communication processing unit 14 functions as processing information transmission means.

Thereby, it enables to notify the user of the funded pension service that how much personal pension is reserved so far today after a certain period of time or regularly. This can eliminate the user's concerns that the pension is actually reserved, together with stimulating the user to reserve and encouraging to purchase products.

### Embodiment 13

Also, as the new sixth function, the funded pension processing device 1 of the present invention can receive the inquiry request of the funded pension information by the user.

In this case, the funded pension processing device 1 further has the communication processing unit 14 and the extraction processing unit 15.

The communication processing unit 14 of the embodiment is the means for having the function to receive the inquiry request of the funded pension information with the user ID from the user terminal 4. In this case, the communication processing unit 14 functions as inquiry request reception means.

Moreover, the communication processing unit 14 of the embodiment is the means for having the function to transmit the funded pension information extracted by the extraction processing unit 15 to the user terminal 4 which has received the inquiry request. In this case, the communication processing unit 14 functions as processing information transmission means.

Also, the extraction processing unit 15 of the embodiment is the means for having the function to extract the funded pension information registered in association therewith; by referring to the funded pension information DB 21 based on the user ID included in the inquiry request received from the communication processing unit 14. In this case, the extraction processing unit 15 functions as funded pension information extraction means.

Thereby, the user can access the funded pension processing device 1 through the certain websites via the user terminal 4, then transmits the inquiry request of the user's funded pension, and by receiving the inquiry result, the user is able to verify (inspect) how much personal pension has been reserved so far today, at anywhere and at anytime the user wants.

### Embodiment 14

Moreover, as the new seventh function, the funded pension processing device 1 according to the present invention can notify the sales and the funded pension information to the store after a certain period of time, or regularly. In this case, in the funded pension processing device 1, together with the communication processing unit 14 and the extraction processing unit 15, the storage unit 20 further has the processing information database (hereinafter abbreviated as the "processing information DB") 26.

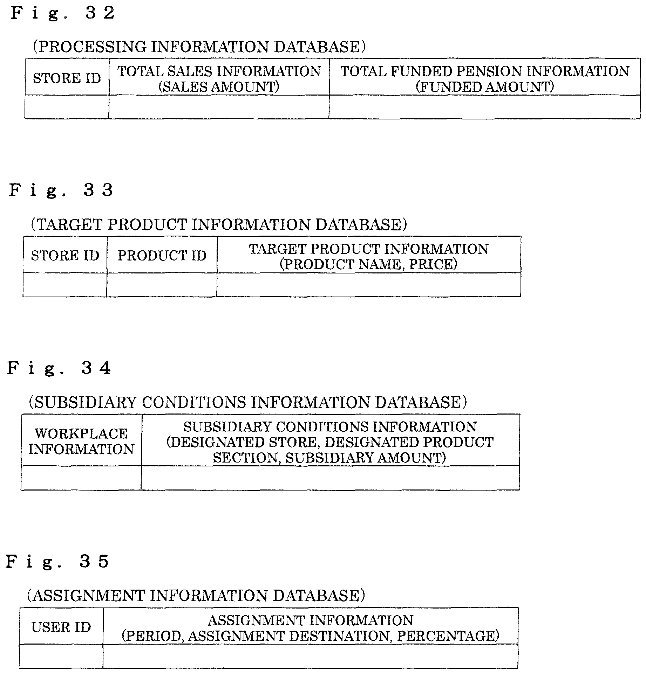

The processing information DB 26 is the means for storing the total funded pension information, totalled the funded pension amount of the user and the total sales information totalled the store's sales amount by each store. Thus, as Fig. 32 describes, the processing information DB 26 stores a total sales amount information and a funded pension amount associated with the store ID for identifying the store that has registered for the funded pension service.

Here, the store ID registered to the processing information DB 26 is the unique identification mark assigned by the administrator of the funded pension service to identify the store that uses this service. The store ID of the present invention includes notified party information such as address, telephone number, facsimile number, and email address.

Thus, according to the present invention, the store ID is associated with the store name, address, telephone number, facsimile number, and email address which has been registered by the store in advance when the user receives the funded pension service. This association can be performed in the processing information DB 26, or the store information DB 23 described above. In short, the registration and management of a total sales amount information and a funded pension amount in the processing information DB 26 can be easier and more effective by associating with the store ID at the store information DB 23, rather than registering and managing associated with the store ID and the notified party information at the processing information DB 26, depending on how the funded pension processing device 1 described above is going to be implemented.

The extraction processing unit 15 of this embodiment is the means for having the function to extract the applicable store's notified party information from the processing information DB 26 based on the store ID, together with extracting a total sales amount information and/or a total funded pension amount information registered by each store to the processing information DB 26, after the elapse of a predetermined period. In this case, the extraction processing unit 15 functions as processing information extraction means.

The communication processing unit 14 of the embodiment is the means for having the function to transmit a total sales amount information and/or a total funded pension amount information extracted by the extraction processing unit 15, based on the notified party information which is extracted together to each store terminal 3. In this case, the communication processing unit 14 functions as processing information transmission means.

Thereby, it enables to notify the store that how much sales generates so far today for the store that implements the funded pension service and how much the user's funded pension generates after a certain period of time or regularly and handle the store's accounting process properly.

### Embodiment 15

Moreover, as the new eighth function, the funded pension processing device 1 of the present invention can receive inquiry request of a sales and funded pension information by the store. In this case, in the funded pension processing device 1, together with the communication processing unit 14 and the extraction processing unit 15, the storage unit 20 further has the processing information DB 26.

The communication processing unit 14 of the embodiment is the means for having the function to receive the inquiry request of a total sales amount information and/or a total funded pension amount information with the store ID from the store terminal 3. In this case, the communication processing unit 14 functions as inquiry request reception means.

Moreover, the communication processing unit 14 of the embodiment is also the means for having the function to transmit a total sales amount information and/or a total funded pension amount information extracted by the extraction processing unit 15 to the store terminal 3 which inquiry is requested. In this case, the communication processing unit 14 functions as processing information transmission means.

Also, the extraction processing unit 15 of the embodiment is the means for having the function to extract a total sales amount information and/or a total funded pension amount information registered in association therewith, by referring to the processing information DB 26 based on the store ID which is included in the inquiry request received from the communication processing unit 14. In this case, the extraction processing unit 15 functions as processing information extraction means.

Thereby, the store can access the funded pension processing device 1 through the certain website via the store terminal 3, then transmits the inquiry request of the store's total sales amount and/or total funded pension amount, and by receiving the inquiry result, the store is able to verify (inspect) how much sales the store generates, and how much the store contributes to the user's funded pension so far today, at anywhere and at anytime the store wants.

### Embodiment 16

Moreover, as the new ninth function, the funded pension processing device 1 of the present invention can notify the user the target product information that is applicable for the funded pension service.

In this case, in the funded pension processing device 1, together with the communication processing unit 14, the extraction processing unit 15, and the product information registration unit 19, the storage unit 20 further has the user information DB 23 and the target product information database (hereinafter abbreviated as the "target product information DB") 27.

The target product information DB 27 is the means for storing the target product information that is applicable for the funded pension service. Thereby, as the Fig. 33 describes, the target product information DB 27 stores the target product information such as the target product name and price associated with the store ID for identifying the store that has registered for the funded pension service and the product ID for identifying the product that the store sells is applicable for the funded pension service.

The communication processing unit 14 of the embodiment is the means for having the function to receive the product information that is applicable for the funded pension service with the store ID from the store terminal 3. In this case, the communication processing unit 14 functions as target product information reception means.

Also, the communication processing unit 14 of the embodiment is the means for having the function to transmit the target product information extracted by the extraction processing unit 15, to each user terminal 4 based on the notified party information. In this case, the communication processing unit 14 function as processing information transmission means.

Moreover, the extraction processing unit 15 of the embodiment is the means for having the function to extract the notified party information of the application-allowed person by referring to the user information DB 23, together with extracting the target product information registered to the target product information DB 27, right after the receipt of the target product information or after the elapse of a predetermined period. In this case, the extraction processing unit 15 functions as target product information extraction means.

Here, the application-allowed person can be the user who has requested the notification in advance, or the user who satisfies the conditions specified by the store.

Also, the product information registration unit 19 of the embodiment is the means for having the function to register the target product information received from the communication processing unit 14 to the target product information DB 27.

Thereby, it enables to notify the funded pension service user right after or regularly that what kind of product at the store near the user is applicable for the funded pension service, based on the user's address and place of work. This stimulates the user to reserve the funded pension and encourages to purchase products.

### Embodiment 17

Moreover, as the new tenth function, the funded pension processing device 1 of the present invention can receive the inquiry request of the target product information by the user.

In this case, in the funded pension processing device 1, together with the communication processing unit 14, the extraction processing unit 15, and the product information registration unit 19, the storage unit 20 further has the target product information DB 27.

The communication processing unit 14 of the embodiment is the means for having the function to receive the product information that is applicable for the funded pension service with the store ID from the store terminal 3. In this case, the communication processing unit 14 functions as target product information reception means.

Also, the communication processing unit 14 of the embodiment is the means for having the function to receive the inquiry request of the target product information with the user ID from the user terminal 4. In this case, the communication processing unit 14 functions as inquiry request reception means.

Moreover, the communication processing unit 14 of the embodiment is the means for having the function to transmit the target product information extracted by the extraction processing unit 15 to the user terminal 4 which inquiry is requested. In this case, the communication processing unit 14 functions as processing information transmission means.

Also, the extraction processing unit 15 of the embodiment is the means for having the function to extract the registered target product information, by referring to the target product information DB 27, in response to the receipt of the inquiry request of the target product information in the communication processing unit 14. In this case, the extraction processing unit 15 functions as target product information extraction means.

Here, the determination processing unit 16 is further configured and refers to the user information DB 23 based on the user ID included in the inquiry request received from the communication processing unit 14, then the user who has requested the inquiry determines whether or not the user is satisfies the conditions specified by the store. When the user satisfies the conditions, the target product information can be extracted by the extraction processing unit 15 and transmit to the user terminal 4 which inquiry is requested in the communication processing unit 14.

Moreover, the product information registration unit 19 of the embodiment is the means for having the function to register the target product information received from the communication processing unit 14 to the target product information DB 27.

Thus, the user can access the funded pension processing device 1 through the certain websites via the user terminal 4, transmit the inquiry request of the product information that is applicable for the funded pension service by specifying the area, industry, service and the like, and by receiving the inquiry result, the user can verify (inspect) what kind of product is applicable for the funded pension service at anywhere and at anytime the user want.

### Embodiment 18

Also, as the new eleventh function, the funded pension processing device 1 of the present invention can allow the employer to cover a part of an amount of the product purchased by the user.

In this case, in the funded pension processing device 1, with the determination processing unit 16, the storage unit 20 further has the user information DB 24 and the subsidiary conditions information database (hereinafter abbreviated as the "subsidiary conditions information DB") 28.

The subsidiary conditions information DB 28 is the means for storing the subsidiary conditions information on the contents that a part of a settlement amount can be subsidized in response to the user's product purchase. In short, as Fig. 34 describes, the subsidiary conditions information DB 28 stores the subsidiary conditions information which specifies the store that the employer supports, product classification, the date and time of use, and subsidized amount and the like by each user's employer.

The subsidiary conditions can be specified, such as Store A/Food and Beverages/11:30 - 14:00/up to 300 yen, Store B/Massage/19:00 - 21:00/up to 500 yen, or, Store C/Meal/21:00 - 23:00/up to 1,000 yen.

The determination processing unit 16 of the embodiment extracts the employer information by referring to the user information DB 24 based on the user ID for identifying the user who has purchased the product, upon receipt of the settlement information or acquisition of the payment information. Moreover, the determination processing unit 16 is the means for having the function to extract the subsidiary information on the subsidiary amount when the subsidiary is determined to be applicable by determining whether or not the subsidiary conditions information is available and applicable to subsidize based on the employer information by referring to the subsidiary conditions information DB 28 after the extraction of the employer information. In this case, the determination processing unit 16 functions as subsidiary availability determination means.

Also, the funded pension registration unit 18 of the embodiment is the means for having the function to register the funded pension information based on the user ID, as the subsidiary conditions information is the funded pension information, when the subsidiary information has been extracted by the determination processing unit 16.

Furthermore, the funded pension processing device 1 of the embodiment is configured to be able to communicate through a network with an employer terminal used in the workplace that the user works for, and the subsidiary information can be changed timely in response to work situations such as the user's working days, working hours, workplaces, job descriptions, and performances.

Thereby, depending on the store that the product was purchased, the classification of the purchased product, and the product purchased time, a part of the product purchase amount can be subsidized by the employer as a part of employee benefit, and this subsidized amount can be funded to the personal pension.

### Embodiment 19

Also, as the new twelfth function, in the funded pension processing device 1 of the present invention, a part of the funded pension which is funded by the user's product purchase can be transferred to a third party.

In this case, in the funded pension processing device 1, with the determination processing unit 16, the storage unit 20 further has the transfer information database (hereinafter abbreviated as the "transfer information DB") 29.

The transfer information DB 29 is the means for storing the transfer information to a third party apart from the user, regarding to a part of the funded pension reserved by the user's product purchase. In short, as Fig. 35 describes, the transfer information DB 29, stores the transfer information associated with the user ID.

Furthermore, the transfer information of the embodiment is the user ID for identifying a third party as transferee information (or it can be information on the name and the relationship with the transferee.), the transfer period and the ratio of the transfer. Also, the ratio of the transfer can be set or changed as the upper limit of a funded pension amount which is reserved in response to the user' s product purchase.

Moreover, the funded pension information DB 21 of the embodiment stores a funded pension information on a funded pension amount by treating a third party as the user. In short, the funded pension information is registered by assigning the user ID to identify the third party.

Also, the settlement amount processing unit 17 of the embodiment is the means for having the function to further calculate the funded pension amount of the user and the funded pension amount transferred to the third party based on the transfer information and the funded pension amount by extracting the transfer information based on the user ID by referring to the transfer information DB 29 after the calculation of the funded pension amount.

Moreover, the funded pension registration unit 18 of the embodiment is the means for having the function to register the funded pension information on a transferred funded pension amount associated with the third party's user ID to the funded pension information DB 21, together with registering the funded pension information on a funded pension amount associated with the user ID to the transfer information DB 29.

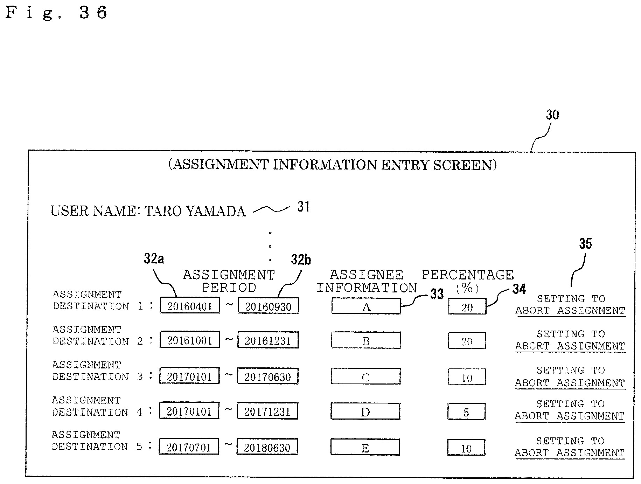

Here, as Fig. 36 describes, the setting or changes of the transfer information can be made; for insurance, on the transfer information input screen 30. Therefore, the user accesses the funded pension processing device 1 through the certain websites and transmits setting change request of the transfer information by the user itself, after the user logs in by inputting the ID and password. Then, through the connected transfer information input screen 30, the user inputs the commencement information on the transfer period 32a, termination information 32b, transferee information 33, and transfer ratio information 34 by each transferred party.

Fig. 36 is configured to have the user name display field 31, together with transfer commencement information input box 32a and transfer termination information input box 32b, transferee information input box 33, and transfer ratio information input box 34, as the transfer information. Also, it is configured to have the transfer cancellation setting button 35 in order to cancel the processing based on configured transfer information.

In Fig. 36, the user name Taro Yamada is displayed in the user name display field 31, together with displaying the 5 transferred party information. The transferred party information 1 displays that 20% of a funded pension amount will be transferred to Mr. A, as a transferee, for six months from 1 April 2016 to 30 September 2016. Moreover, the transferred party information 2 displays that 20% of a funded pension amount will be transferred to Mr. B as a transferee, for three months from 1 October 2016 to 31 December 2016. Also, the transferred party information 3 displays that 10% of a funded pension amount will be transferred to Mr. C as a transferee, for 6 months 1 January 2017 to 30 June 2017. Also, the transferred party information 4 displays that 5% of a funded pension amount will be transferred to Mr. D as a transferee, for 12 months from 1 January 2017 to 31 December 2017. Then, the transferred party information 5 displays that 10% of a funded pension amount will be transferred to Mr. E as a transferee, for 12 months from 1 July 2017 to 30 June 2018.

Thereby the user can express the daily gratitude by transferring a part of the funded pension to a teacher or a mentor who taught the user for tasks, skills, and knowhow, or transferring it to family as a part of inheritance.

According to the present invention described above, the store only needs to process settlement normally, while the certain amount of the product price set by the store will be deducted and automatically funded to the personal pension for the user. Also, in the present invention, the store can enhance the corporate value through the social causes by spending the deducted amount in supporting the specific people (i.e. low-income earners) efficiently and effectively which is the same as so-called donations.

Furthermore, the downturn of consumption can be avoided by stimulating the particular person's spending, together with casting aside the anxiety of the particular person's future life. For example, 10, 000 yen is funded a month as the personal pension if 10% is deducted from the monthly spending of 100,000 yen. In that case, 120,000 yen will be reserved in a year, and by continuously reserving for 40 years, then 4,800,000 yen will be automatically reserved. If the person receives 50,000 yen a month from the age of 65, the person will be able to receive it for 96 months (8 years) continuously until the age of 73.

Therefore, by receiving the funded personal pension of the present invention, it can cover a receivable amount of pay-as-you-go public pension that is most likely to decrease in the future, which can support the future life. Also, the qualification period of the funded personal pension of the present invention can be further extended as the pension can be reserved continuously by consuming while reserving the pension.

On the other hand, the store can avoid decreasing sales more than necessary because the store can sell general customers at the list price as the displayed price still stays the same at the store and the store can sell at a discount price to only the members of this service or certain people. Moreover, unnecessary expenses can be reduced as it enables the store to sell the imperfect products, rather than spending expenditures for disposing them. Also, as the store does not have to widely advertise to general customers about limited time offers in order to sell the imperfect products, so that the congestion at the sales floor and cashiers at the certain period of time can be solved.

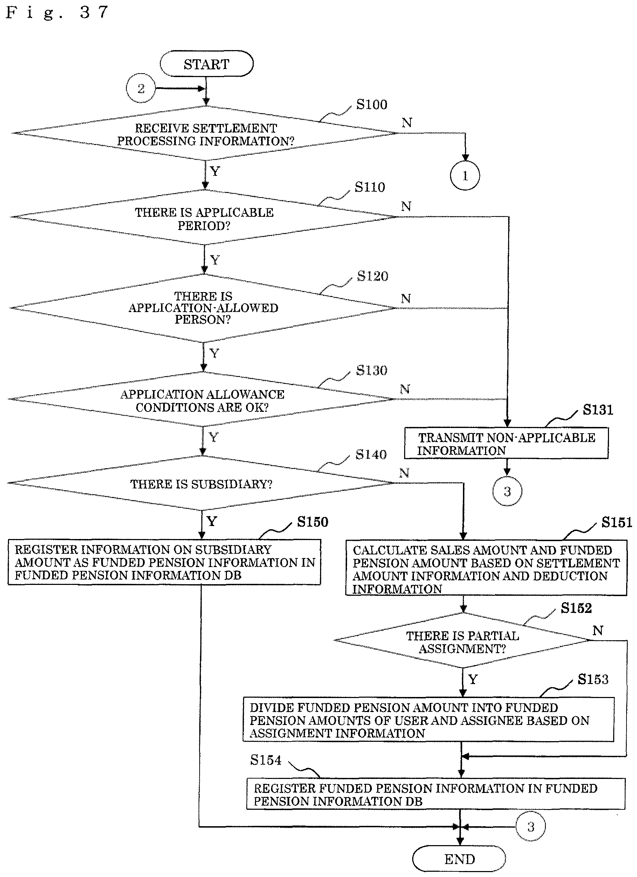

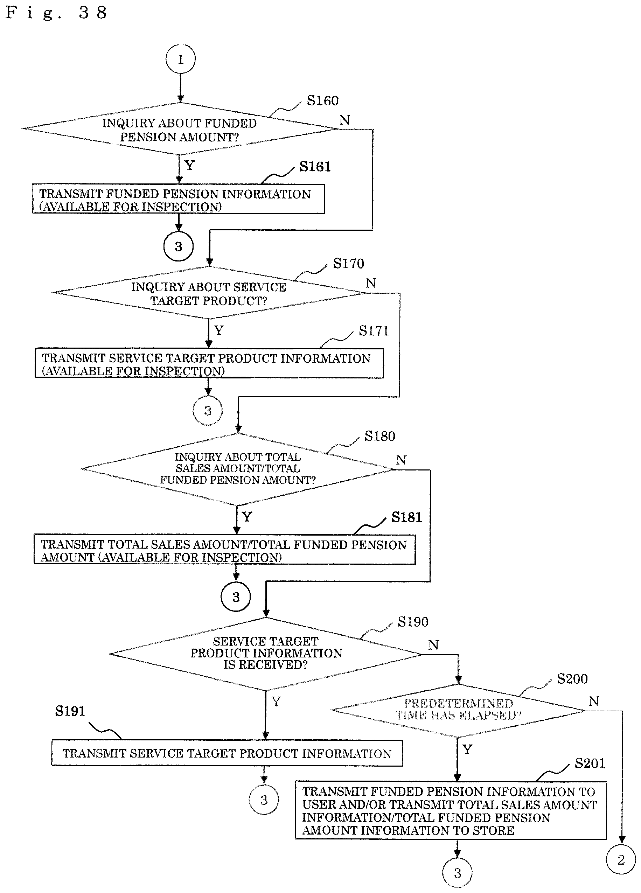

Next, with reference to Fig. 37, 38, and 39, description is given of an example of operations of the funded pension processing device 1 of the present invention that has various new functions described above.

First, the communication processing unit 14 determines whether or not the settlement information is received (or the payment information is acquired) (S100).

As a result, when the communication processing unit 14 has determined that the settlement information is received (Y), the determination processing unit 16 refers the store information DB 23 based on the store ID included in the settlement information received (or acquired) from the communication processing unit 14 and determines whether or not the date of the product purchase is applicable for the funded pension service (S110).

As a result, when the determination processing unit 16 determines that the period is applicable for the funded pension service (Y), the determination processing unit 16 refers the user information DB 24 based on the user ID included in the settlement information received (or acquired) from the communication processing unit 14 and determines whether or not the user who purchases the product is the application-allowed person for the funded pension service (S120).

As a result, when the determination processing unit 16 has determined that the user is the application-allowed person for the funded pension service (Y), the determination processing unit 16 subsequently refers the user information DB 24 based on the user ID after extracting information on the application allowance condition of the funded pension service by referring to the application information DB 25 based on the store ID and determines whether or not the user who purchases the product is application-allowed person who satisfies the application allowance condition of the funded pension service (S130).

As a result, the determination processing unit 16 has determined that the user is application-allowed person who satisfies the application allowance condition of the funded pension service (Y), the determination processing unit 16 subsequently refers the user information DB 24 based on the user ID, together with extracting the user's employer information, referring to the subsidiary conditions information DB 28 based on the employer information, and determines whether or not the subsidiary conditions information is available and applicable (S140).

As a result, the determination processing unit 16 has determined that the subsidiary is available and applicable (Y), the determination processing unit 16 extracts the subsidiary information on a subsidiary amount, and the funded pension registration unit 18 registers the subsidiary information extracted from the determination processing unit 16 as the funded pension information to a funded pension information DB 21, based on the user ID (S150).

Thus, a series of operations of the funded pension processing device 1 of the present invention are completed (end).

On the other hand, when the determination processing unit 16 has determined that the subsidiary is not available (N), the settlement amount processing unit 17 calculates the store's sales amount and the user's funded pension amount based on the settlement amount information and deduction information (S151).

Subsequently, the settlement amount processing unit 17 determines whether or not the transfer information is set based on the user ID by referring to the transfer information DB 29 (S152).

As a result, when the settlement amount processing unit 17 has determined that the transfer information is set (Y), the settlement amount processing unit 17 extracts the transfer information and calculates by dividing a funded pension amount based on the transfer information, a user's funded pension amount, and a third party's transferred funded pension amount (S153).

Thus, the funded pension registration unit 18 registers the funded pension information on a funded pension amount associated with the user ID to the funded pension information DB 21, together with registering the funded pension information on a transferred funded pension amount to the funded pension information DB 21 associated with the third party's ID (S154).

On the other hand, when the settlement amount processing unit 17 has determined that the transfer information is not set (N), the funded pension registration unit 18 registers the funded pension information on a funded pension amount calculated in a settlement amount processing unit 17 to funded pension information DB 21, based on the user ID (S154). Thus, a series of operations of the funded pension processing device 1 of the present invention are completed (end).

Also, when the determination processing unit 16 has determined that the period is not applicable for the funded pension service (N) and the determination processing unit 16 has determined that the user is not the application-allowed person for the funded pension service (N), and when the determination processing unit 16 determines that the user is not application-allowed person who satisfies the application allowance condition (N), the communication processing unit 14 transmits the not applicable allowance information of the funded pension service to the specified communicated party (S131). Thus, a series of operations of the funded pension processing device 1 of the present invention are completed (end).

Also, when the communication processing unit 14 has determined that the settlement information is not received (N), the communication processing unit 14 determines whether or not the inquiry request of the funded pension information is received from the user terminal 4 (S160).

As a result, when the communication processing unit 14 has determined that the inquiry request of the funded pension information is received (Y), the extraction processing unit 15 refers the funded pension information DB 21 based on the user ID included in the received inquiry request, together with extracting the funded pension information registered in association therewith, and the communication processing unit 14 enables to inspect the funded pension information by transmitting the funded pension information extracted by the extraction processing unit 15 to the user terminal 4 which inquiry is requested (S161).

Thus, a series of operations of the funded pension processing device 1 of the present invention are completed (end).

On the other hand, when the communication processing unit 14 has determined that the inquiry request of the funded pension information is not received (N), the communication processing unit 14 determines whether or not inquiry request of the target product that is applicable for the funded pension service is received from the user terminal 4 (S170).

As a result, when the communication processing unit 14 has determined that inquiry request of the target product that is applicable for the funded pension service is received (Y), the extraction processing unit 15 extracts the target product information by referring to the target product information DB 27, and together with the communication processing unit 14 enables to inspect the target product information of the funded pension service, by transmitting the target product information extracted by the extraction processing unit 15 to the user terminal 4 which inquiry was requested (S171).

Thus, a series of operations of the funded pension processing device 1 of the present invention are completed (end).

On the other hand, when the communication processing unit 14 has determined that inquiry request of the target product that is applicable for the funded pension is not received (N), the communication processing unit 14 determines whether or not inquiry request of a total sales amount information and/or a total funded pension information is received from the store terminal 3 (S180).

As a result, when the communication processing unit 14 has determined that inquiry request of the target product that is applicable for the funded pension service is received (Y), the extraction processing unit 15 refers the processing information DB 26 based on the store ID included in the received inquiry request, extracts a total sales amount information and/or a total funded pension amount information registered in association therewith, and together with the communication processing unit 14 enables to inspect a total sales amount information and/or a total funded pension amount information, by transmitting a total sales amount information and/or a total funded pension amount information extracted by the extraction processing unit 15 to the store terminal 3 which inquiry is requested (S181).

Thus, a series of operations of the funded pension processing device 1 of the present invention are completed (end).

On the other hand, when the communication processing unit 14 has determined that the inquiry request of the target product that is applicable for the funded pension service is not received (N), the communication processing unit 14 determines whether or not the target product information on the target product that is applicable for the funded pension service is received from the store terminal 3 (S190).

As a result, when the communication processing unit 14 has determined that the target product information on the target product that is applicable for the funded pension service is received (Y), the product information registration unit 19 registers the received target product information to the target product information DB 27. Subsequently, the extraction processing unit 15 extracts the target product information registered in the target product information DB 27, together with extracting the notified party information of the user that applies to the user information DB 24, and the communication processing unit 14 further transmits the target product information extracted by the extraction processing unit 15 to each user based on the same notified party information (S191). Thus, a series of operations of the funded pension processing device 1 of the present invention are completed (end).

On the other hand, when the communication processing unit 14 has determined that the target product information that is applicable for the funded pension service is not received (N), the extraction processing unit 15 determines whether or not a predetermined period has been elapsed (S200).

As a result, when the extraction processing unit 15 has determined that a predetermined period has been elapsed (Y), the extraction processing unit 15 extracts the funded pension information registered for each user in the funded pension information DB 21, together with extracting the notified party information of the applicable user, and the communication processing unit 14 transmits the funded pension information extracted by the extraction processing unit 15 to the user terminal 4 based on the notified party information extracted together (S201).

Also, when the extraction processing unit 15 has determined that a predetermined period has been elapsed (Y), the extraction processing unit 15 extracts a total sales amount information and/or a total funded pension amount information registered to the processing information DB 26 by each store, together with extracting the notified party information of the applicable store, and the communication processing unit 14 transmits a total sales amount information and/or a total funded pension amount information extracted by the extraction processing unit 15, to the store terminal 3 based on the notified party information which is extracted together (S201). Thus, a series of operations of the funded pension processing device 1 of the present invention are completed (end).

On the other hand, when the extraction processing unit 15 has determined that a predetermined period has not been elapsed (N), the communication processing unit 14 repeats the determination of whether or not the settlement information is received (or the payment information is acquired) (S100).

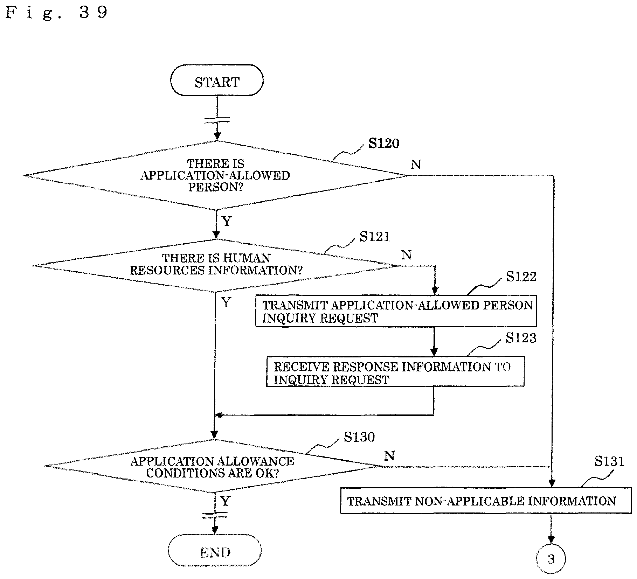

Next, with reference to Fig. 39, description is given of an example of operations when the user is restricted based on the human resources information in the funded pension processing device 1 of the present invention which has new various functions described above.

When the determination processing unit 16 determines whether or not the user who purchases the product is application-allowed person for the funded pension service (S120), and when it is determined that the user is application-allowed person for the funded pension service (Y), the determination processing unit 16 determines whether or not the human resources information on an application allowance condition of the extracted funded pension service by referring to the user information DB 24 based on the user ID after extracting information on the application allowance condition of the funded pension service by referring to the application information DB 25 based on the store ID (S121).

As a result, when the determination processing unit 16 has determined that the human resources information is registered (Y), the determination processing unit 16 subsequently determines whether or not the user who purchases the product is the application-allowed person who satisfies application allowance condition of the funded pension service (S130).

As a result, when the determination processing unit 16 determines whether or not the user associated with the purchase of the product satisfies application allowance condition of the funded pension service (Y), henceforth, it will process the same as described above.

On the other hand, when the determination processing unit 16 has determined that the user who purchases the product does not satisfy the application allowance condition of the funded pension service (N), the communication processing unit 14 transmits the information of not applicable for the funded pension service to a certain communication party (S131). A series of operations of the funded pension processing device 1 of the present invention are completed (end).

When the determination processing unit 16 has determined that the human resources information is not registered (N), the communication processing unit 14 transmits the application allowance condition of the funded pension service with the user ID to the human resources information management device 7 and transmits inquiry request that inquires whether or not the user is the application-allowed person that satisfies the application allowance condition of the funded pension service of the user in light of the human resources information (S122).

Subsequently, the communication processing unit 14 receives response information to the inquiry request from the human resources information management device (S123).

Also, the determination processing unit 16 determines that the received response information is whether or not the user is the application-allowed person that satisfies the application allowance condition (S130).

Henceforth, it will process the same as described above. Description of Code.

### Reference Signs List

NW Network
1 (1A, 1B, 1C, 1D, 1E, 1F, 1G) Funded pension processing device
3 Store terminal
4 User terminal
6 Financial institution terminal
7 Human resources information management system
11A, 11E Settlement processing unit
12A Deduction information acquisition unit
12E Deduction information identification unit
13A, 13E User information acquisition unit
14 (14B, 14C, 14D, 14F, 14G) Communication processing unit
15 (15C, 15D, 15F, 15G) Extraction processing unit
16 Determination processing unit
17 (17A, 17B, 17C, 17D, 17E, 17F, 17G) Settlement amount processing unit
18 Funded pension registration unit
19 Product information registration unit
20 Storing unit
21 Funded pension information database
22 (22C, 22D, 22E, 22F, 22G) Deduction information database
23 (23E) Store information database
24 User information database
25 Application information database
26 Processing information database
27 Target product information database
28 Subsidiary condition information database
29 Transfer information database

## Claims

1. A funded pension processing device for providing a funded pension service in which, according to a purchase of a product by a user, the user reserves a part of a settlement amount for the product through a store as an individual pension for the user, the device being configured to be able to communicate through a network with a human resources information management device having human resources information storage means storing human resources information of the user as a laborer, the device comprising at least:
funded pension information storage means for storing funded pension information on a funded pension amount reserved according to the purchase of the product for each user;
user information storage means for storing user identification information for identifying a user to whom the funded pension service is applicable and detailed personal information for each user;
application information storage means for storing information on an application allowance condition for the funded pension service set by the store;
application-allowed person determination means for referring to the application information storage means to extract information on the application allowance condition for the funded pension service based on store identification information specified in response to the purchase of the product by the user, and then referring to the user information storage means to determine whether or not the user based on the user identification information specified in response to the purchase of the product by the user is an application-allowed person who satisfies the extracted application allowance condition for the funded pension service;
inquiry request transmission means for transmitting the application allowance condition for the funded pension service, together with the user identification information, to the human resources information management device, and also transmitting an inquiry request to make an inquiry about whether or not the user is the application-allowed person who satisfies the application allowance condition for the funded pension service in light of the human resources information;
response information reception means for receiving response information to the inquiry request from the human resources information management device;
settlement amount processing means for calculating a sales amount of the store and a funded pension amount for the user, based on settlement amount information calculated according to the purchase of the product and deduction information set by the store selling the product to support the user; and
funded pension registration means for registering the funded pension information on the funded pension amount calculated by the settlement amount processing means in the funded pension information storage means in association with the user identification information for identifying the user who has purchased the product, wherein
when the application-allowed person determination means determines whether or not the user associated with the purchase of the product is the application-allowed person who satisfies the application allowance condition for the funded pension service, the inquiry request transmission means makes an inquiry to the human resources information management device about whether or not the user is the application-allowed person,
when the human resources information related to the extracted application allowance condition for the funded pension service is not registered in the user information storage means, the application-allowed person determination means determines whether or not the user associated with the purchase of the product is the application-allowed person who satisfies the application allowance condition for the funded pension service, based on the response information received by the response information reception means, and
the settlement amount processing means calculates the sales amount and the funded pension amount upon receipt of information from the application-allowed person determination means, indicating that the user is the application-allowed person who satisfies the application allowance condition for the funded pension service.

2. The funded pension processing device according to claim 1, further comprising:
checkout processing means for acquiring price information of the product in response to the purchase of the product by the user, and calculating a settlement amount;
deduction information acquisition means for acquiring deduction information set by the store selling the product to support the user; and
user information acquisition means for acquiring the user identification information for identifying the user who purchases the product, wherein
upon receipt of the information indicating that the user is the application-allowed person who satisfies the application allowance condition for the funded pension service from the application-allowed person determination means in response to acquisition of payment information, the settlement amount processing means calculates the sales amount and the funded pension amount based on the settlement amount information on the settlement amount calculated by the checkout processing means and the deduction information acquired by the deduction information acquisition means, and
the funded pension registration means registers the funded pension information based on the user identification information acquired by the user information acquisition means.

3. The funded pension processing device according to claim 1, wherein
the funded pension processing device is further configured to be able to communicate through a network with a store terminal installed in a store selling a product,
the funded pension processing device further comprises:
settlement information reception means for receiving settlement information from the store terminal, including the user identification information for identifying the user who has purchased the product, the settlement amount information on the purchase of the product by the user, the store identification information for identifying the store that has sold the product, and the deduction information set by the store selling the product to support the user; and
processing information transmission means for transmitting to the store terminal sales information on the sales amount and funded pension information on the funded pension amount, which are calculated by the settlement amount processing means,
upon receipt of the information indicating that the user is the application-allowed person who satisfies the application allowance condition for the funded pension service from the application-allowed person determination means, the settlement amount processing means calculates the sales amount and the funded pension amount based on the settlement amount information and the deduction information included in the settlement information received by the settlement information reception means, and
the funded pension registration means registers the funded pension information based on the user identification information included in the settlement information received by the settlement information reception means.

4. The funded pension processing device according to claim 1, wherein
the funded pension processing device is further configured to be able to communicate through a network with a store terminal installed in a store selling a product,
the funded pension processing device further comprises:
deduction information storage means for storing, for each store, deduction information set by the store selling the product to support the user;
settlement information reception means for receiving settlement information from the store terminal, including the user identification information for identifying the user who has purchased the product, the settlement amount information on the purchase of the product by the user, and the store identification information for identifying the store that has sold the product;
deduction information extraction means for referring to the deduction information storage means based on the store identification information included in the settlement information received by the settlement information reception means, and extracting the deduction information registered in association therewith; and
processing information transmission means for transmitting to the store terminal sales information on the sales amount and funded pension information on the funded pension amount, which are calculated by the settlement amount processing means,
upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means, and
the funded pension registration means registers the funded pension information based on the user identification information included in the settlement information received by the settlement information reception means.

5. The funded pension processing device according to claim 1, wherein
the funded pension processing device is further configured to be able to communicate through a network with a store terminal installed in a store selling a product,
the funded pension processing device further comprises:
deduction information storage means for storing, for each store, deduction information set by the store selling the product to support the user;
settlement information reception means for receiving settlement information from the store terminal, including the user identification information for identifying the user who has purchased the product, the settlement amount information on the purchase of the product by the user, the store identification information for identifying the store that has sold the product, and product identification information for identifying the product;
deduction information extraction means for referring to the deduction information storage means based on the store identification information and the product identification information included in the settlement information received by the settlement information reception means, and extracting the deduction information registered in association therewith; and
processing information transmission means for transmitting to the store terminal sales information on the sales amount and funded pension information on the funded pension amount, which are calculated by the settlement amount processing means,
upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means, and
the funded pension registration means registers the funded pension information based on the user identification information included in the settlement information received by the settlement information reception means.

6. The funded pension processing device for providing a cloud computing service according to claim 1, wherein
the funded pension processing device is further configured to be able to communicate through a network with a store terminal installed in a store selling a product,
the funded pension processing device further comprises:
deduction information storage means for storing, for each store, product identification information and deduction information set by the store selling the product to support the user in association with each other;
store information storage means for storing, for each store, product identification information for identifying a product, price information of the product, and information indicating whether or not the deduction information is set, in association with each other;
checkout processing means for acquiring through the store terminal store identification information for identifying the store that has sold the product and product identification information for identifying the product, in response to the purchase of the product by the user, and specifying price information based on the store identification information and the product identification information by referring to the store information storage means to calculate the settlement amount and check if the deduction information is set for the product;
deduction information specification means for specifying, when it is confirmed by the checkout processing means that the deduction information is set, deduction information based on the store identification information and the product identification information by referring to the deduction information storage means; and
user information acquisition means for acquiring through the store terminal the user identification information for identifying the user who purchases the product, and
upon receipt of the information indicating that the user is the application-allowed person who satisfies the application allowance condition for the funded pension service from the application-allowed person determination means in response to acquisition of payment information, the settlement amount processing means calculates the sales amount and the funded pension amount based on the settlement amount information on the settlement amount calculated by the checkout processing means and the deduction information acquired by the deduction information specification means, and
the funded pension registration means registers the funded pension information based on the user identification information acquired by the user information acquisition means.

7. The funded pension processing device according to claim 1, wherein
the funded pension processing device is further configured to be able to communicate through a network with a user terminal used by a user who purchases a product,
the funded pension processing device further comprises:
deduction information storage means for storing, for each store, deduction information set by the store selling the product to support the user;
settlement information reception means for receiving settlement information from the user terminal, including the user identification information for identifying the user who has purchased the product, the settlement amount information on the purchase of the product by the user, and the store identification information for identifying the store that has sold the product;
deduction information extraction means for referring to the deduction information storage means based on the store identification information included in the settlement information received by the settlement information reception means, and extracting the deduction information registered in association therewith; and
processing information transmission means for transmitting to the store terminal sales information on the sales amount and funded pension information on the funded pension amount, which are calculated by the settlement amount processing means, based on the store identification information included in the settlement information received by the settlement information reception means,
upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means, and
the funded pension registration means registers the funded pension information based on the user identification information included in the settlement information received by the settlement information reception means.

8. The funded pension processing device according to claim 1, wherein
the funded pension processing device is further configured to be able to communicate through a network with a user terminal used by a user who purchases a product,
the funded pension processing device further comprises:
deduction information storage means for storing, for each store, deduction information set by the store selling the product to support the user;
settlement information reception means for receiving settlement information from the user terminal, including the user identification information for identifying the user who has purchased the product, the settlement amount information on the purchase of the product by the user, the store identification information for identifying the store that has sold the product, and settlement information including product identification information for identifying the product;
deduction information extraction means for referring to the deduction information storage means based on the store identification information and the product identification information included in the settlement information received by the settlement information reception means, and extracting the deduction information registered in association therewith; and
processing information transmission means for transmitting to the store terminal sales information on the sales amount and funded pension information on the funded pension amount, which are calculated by the settlement amount processing means, based on the store identification information included in the settlement information received by the settlement information reception means,
upon receipt of the information indicating that the user is the application-allowed person who satisfies the application allowance condition for the funded pension service from the application-allowed person determination means, the settlement amount processing means calculates the sales amount and the funded pension amount based on the settlement amount information included in the settlement information received by the settlement information reception means and the deduction information extracted by the deduction information extraction means, and
the funded pension registration means registers the funded pension information based on the user identification information included in the settlement information received by the settlement information reception means.

9. The funded pension processing device according to any one of claims 2 to 8, wherein
the funded pension processing device is further configured to be able to communicate through a network with a plurality of communication terminals,
the funded pension processing device further comprises:
assignment information storage means for storing, for each user at his/her request, assignment information indicating that a part of a funded pension reserved in response to the purchase of the product by the user is assigned to a third party other than the user,
the funded pension information storage means stores funded pension information on a funded pension amount for the third party as the user,
the settlement amount processing means extracts the assignment information based on the user identification information by referring to the assignment information storage means after calculating the funded pension amount, and further calculates the funded pension amount for the user and the assigned funded pension amount for the third party, based on the assignment information and the funded pension amount, and
the funded pension registration means registers funded pension information on the funded pension amount in the funded pension information storage means in association with the user identification information, and also registers the funded pension information on the assigned funded pension amount in the funded pension information storage means in association with the user identification information of the third party.

10. A system for providing a funded pension service in which, according to a purchase of a product by a user, the user reserves a part of a settlement amount for the product through a store as an individual pension for the user, wherein
a funded pension processing device that executes processing for reserving a part of the settlement amount, a human resources information management device having human resources information storage means storing human resources information of the user as a laborer, and a financial institution terminal that executes processing for settlement of the settlement amount are configured to be able to communicate with each other through a network,
the funded pension processing device including at least
funded pension information storage means for storing funded pension information on a funded pension amount reserved according to the purchase of the product for each user,
user information storage means for storing user identification information for identifying a user to whom the funded pension service is applicable and detailed personal information for each user,
application information storage means for storing information on an application allowance condition for the funded pension service set by the store,
application-allowed person determination means for referring to the application information storage means to extract information on the application allowance condition for the funded pension service based on store identification information specified in response to the purchase of the product by the user, and then referring to the user information storage means to determine whether or not the user based on the user identification information specified in response to the purchase of the product by the user is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
inquiry request transmission means for transmitting the application allowance condition for the funded pension service, together with the user identification information, to the human resources information management device, and also transmitting an inquiry request to make an inquiry about whether or not the user is the application-allowed person who satisfies the application allowance condition for the funded pension service in light of the human resources information, when no human resources information is registered in the user information storage means upon determination of whether or not the user associated with the purchase of the product is the application-allowed person who satisfies the application allowance condition for the funded pension service by the application-allowed person determination means,
response information reception means for receiving response information to the inquiry request from the human resources information management device,
settlement amount processing means for calculating a sales amount of the store and a funded pension amount for the user, based on settlement amount information calculated according to the purchase of the product and deduction information set by the store selling the product to support the user, upon receipt of information indicating that the user is the application-allowed person who satisfies the application allowance condition for the funded pension service from the application-allowed person determination means,
processing notification transmission means for transmitting to the financial institution terminal a reserve processing notification including a reserve processing request to request that a funded pension be reserved for the user, together with the store identification information for identifying the store that has sold the product, the user identification information, and the funded pension information on the funded pension amount,
completion notification reception means for receiving a reserve processing completion notification that the reserve processing of the funded pension is completed, and
funded pension registration means for registering the funded pension information on the funded pension amount calculated by the settlement amount processing means in the funded pension information storage means in association with the user identification information for identifying the user who has purchased the product, upon receipt of the reserve processing completion notification, wherein
the human resources information management device receives the inquiry request from the funded pension processing device, and transmits the response information to the funded pension processing device, and
the financial institution terminal receives the reserve processing notification from the funded pension processing device, and transmits the reserve processing completion notification to the funded pension processing device.

11. The funded pension processing system according to claim 10, wherein
the funded pension processing device is installed in a store selling a product and executes acquisition of payment information associated with the purchase of the product by the user,
the funded pension processing device further includes checkout processing means for acquiring price information of the product in response to the purchase of the product by the user, and calculating a settlement amount,
deduction information acquisition means for acquiring deduction information set by the store selling the product to support the user, and
user information acquisition means for acquiring the user identification information for identifying the user who purchases the product, wherein
the application-allowed person determination means refers to the application information storage means to extract information on the application allowance condition for the funded pension service and then refers to the user information storage means to determine whether or not the user based on the user identification information acquired by the user information acquisition means is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information on the settlement amount calculated by the checkout processing means and the deduction information acquired by the deduction information acquisition means, upon receipt of information from the application-allowed person determination means, indicating that the user is the application-allowed person who satisfies the application allowance condition for the funded pension service, in response to acquisition of payment information, and
the funded pension registration means registers the funded pension information based on the user identification information acquired by the user information acquisition means.

12. The funded pension processing system according to claim 10, wherein
the funded pension processing device is further configured to be able to communicate with a store terminal that is installed in a store selling a product and executes processing for acquisition of settlement information associated with the purchase of the product by the user,
the store terminal executes the processing of
transmitting to the funded pension processing device settlement information including the user identification information for identifying the user who has purchased the product, the settlement amount information on the purchase of the product by the user, the store identification information for identifying the store that has sold the product, and the deduction information set by the store selling the product to support the user, and
receiving sales information on the sales amount of the store and funded pension information on the funded pension amount for the user from the funded pension processing device, and
the funded pension processing device further includes
settlement information reception means for receiving the settlement information from the store terminal, and
processing information transmission means for transmitting sales information on the sales amount and funded pension information on the funded pension amount, which are calculated by the settlement amount processing means, wherein
the application-allowed person determination means refers to the application information storage means to extract information on the application allowance condition for the funded pension service based on the store identification information included in the settlement information received by the settlement information reception means, and then refers to the user information storage means to determine whether or not the user based on the user identification information included in the settlement information is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information and the deduction information included in the settlement information received by the settlement information reception means, upon receipt of information from the application-allowed person determination means, indicating that the user is the application-allowed person who satisfies the application allowance condition for the funded pension service,
the processing notification transmission means transmits to the financial institution terminal a reserve processing notification including a reserve processing request to request that a funded pension be reserved for the user, together with the store identification information included in the settlement information received by the settlement information reception means, the user identification information, and the funded pension information on the funded pension amount calculated by the settlement amount processing means, and
the funded pension registration means registers the funded pension information based on the user identification information included in the settlement information received by the settlement information reception means.

13. The funded pension processing system according to claim 10, wherein
the funded pension processing device is further configured to be able to communicate with a store terminal that is installed in a store selling a product and executes processing for acquisition of settlement information associated with the purchase of the product by the user,
the store terminal executes the processing of
transmitting to the funded pension processing device settlement information including the user identification information for identifying the user who has purchased the product, the settlement amount information on the purchase of the product by the user, and the store identification information for identifying the store that has sold the product, and
receiving sales information on the sales amount of the store and funded pension information on the funded pension amount for the user from the funded pension processing device, and
the funded pension processing device further includes
deduction information storage means for storing, for each store, deduction information set by the store selling the product to support the user,
settlement information reception means for receiving the settlement information from the store terminal,
deduction information extraction means for referring to the deduction information storage means based on the store identification information included in the settlement information received by the settlement information reception means, and extracting the deduction information registered in association therewith, and
processing information transmission means for transmitting to the store terminal sales information on the sales amount and funded pension information on the funded pension amount, which are calculated by the settlement amount processing means, wherein
the application-allowed person determination means refers to the application information storage means to extract information on the application allowance condition for the funded pension service based on the store identification information included in the settlement information received by the settlement information reception means, and then refers to the user information storage means to determine whether or not the user based on the user identification information included in the settlement information is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information and the deduction information included in the settlement information received by the settlement information reception means, upon receipt of information from the application-allowed person determination means, indicating that the user is the application-allowed person who satisfies the application allowance condition for the funded pension service,
the processing notification transmission means transmits to the financial institution terminal a reserve processing notification including a reserve processing request to request that a funded pension be reserved for the user, together with the store identification information included in the settlement information received by the settlement information reception means, the user identification information, and the funded pension information on the funded pension amount calculated by the settlement amount processing means, and
the funded pension registration means registers the funded pension information based on the user identification information included in the settlement information received by the settlement information reception means.

14. The funded pension processing system according to claim 10, wherein
the funded pension processing device is further configured to be able to communicate with a store terminal that is installed in a store selling a product and executes processing for acquisition of settlement information associated with the purchase of the product by the user,
the store terminal executes the processing of
transmitting to the funded pension processing device settlement information including the user identification information for identifying the user who has purchased the product, the settlement amount information on the purchase of the product by the user, the store identification information for identifying the store that has sold the product, and settlement information including product identification information for identifying the product, and
receiving sales information on the sales amount of the store and funded pension information on the funded pension amount for the user from the funded pension processing device, and
the funded pension processing device further includes
deduction information storage means for storing, for each store, deduction information set by the store selling the product to support the user,
settlement information reception means for receiving the settlement information from the store terminal,
deduction information extraction means for referring to the deduction information storage means based on the store identification information and the product identification information included in the settlement information received by the settlement information reception means, and extracting the deduction information registered in association therewith, and
processing information transmission means for transmitting to the store terminal sales information on the sales amount and funded pension information on the funded pension amount, which are calculated by the settlement amount processing means, wherein
the application-allowed person determination means refers to the application information storage means to extract information on the application allowance condition for the funded pension service based on the store identification information included in the settlement information received by the settlement information reception means, and then refers to the user information storage means to determine whether or not the user based on the user identification information included in the settlement information is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information and the deduction information included in the settlement information received by the settlement information reception means, upon receipt of information from the application-allowed person determination means, indicating that the user is the application-allowed person who satisfies the application allowance condition for the funded pension service,
the processing notification transmission means transmits to the financial institution terminal a reserve processing notification including a reserve processing request to request that a funded pension be reserved for the user, together with the store identification information included in the settlement information received by the settlement information reception means, the user identification information, and the funded pension information on the funded pension amount calculated by the settlement amount processing means, and
the funded pension registration means registers the funded pension information based on the user identification information included in the settlement information received by the settlement information reception means.

15. The funded pension processing system according to claim 10, wherein
the funded pension processing device is further configured to be able to communicate through a network with a store terminal installed in a store selling a product, and provides a cloud computing service to execute acquisition of settlement information associated with the purchase of the product by the user and processing for reserving a part of the settlement amount,
the funded pension processing device further includes
deduction information storage means for storing, for each store, product identification information and deduction information set by the store selling the product to support the user in association with each other;
store information storage means for storing, for each store, product identification information for identifying a product, price information of the product, and information indicating whether or not the deduction information is set, in association with each other;
checkout processing means for acquiring through the store terminal store identification information for identifying the store that has sold the product and product identification information for identifying the product, in response to the purchase of the product by the user, and specifying price information based on the acquired store identification information and product identification information by referring to the store information storage means to calculate the settlement amount and check if the deduction information is set for the product,
deduction information specification means for specifying, when it is confirmed by the checkout processing means that the deduction information is set, deduction information based on the store identification information and the product identification information by referring to the deduction information storage means, and
user information acquisition means for acquiring through the store terminal the user identification information for identifying the user who purchases the product, wherein
the application-allowed person determination means refers to the application information storage means to extract information on the application allowance condition for the funded pension service based on the store identification information acquired by the checkout processing means, and then refers to the user information storage means to determine whether or not the user based on the user identification information acquired by the user information acquisition means is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information on the settlement amount calculated by the checkout processing means and the deduction information acquired by the deduction information specification means, upon receipt of information from the application-allowed person determination means, indicating that the user is the application-allowed person who satisfies the application allowance condition for the funded pension service, in response to acquisition of payment information,
the processing notification transmission means transmits to the financial institution terminal a reserve processing notification including a reserve processing request to request that a funded pension be reserved for the user, together with the store identification information acquired by the checkout processing means, the user identification information acquired by the user information acquisition means, and the funded pension information on the funded pension amount calculated by the settlement amount processing means, and
the funded pension registration means registers the funded pension information based on the user identification information acquired by the user information acquisition means.

16. The funded pension processing system according to claim 10, wherein
the funded pension processing device is further configured to be able to communicate through a network with a user terminal that is used by a user who purchases a product and executes processing for acquisition of settlement information associated with the purchase of the product by the user, and with a store terminal installed in a store selling the product,
the user terminal transmits settlement information to the funded pension processing device, including the user identification information for identifying the user who has purchased the product, the settlement amount information on the purchase of the product by the user, and the store identification information for identifying the store that has sold the product, and
the funded pension processing device further includes
deduction information storage means for storing, for each store, deduction information set by the store selling the product to support the user,
settlement information reception means for receiving the settlement information from the user terminal,
deduction information extraction means for referring to the deduction information storage means based on the store identification information included in the settlement information received by the settlement information reception means, and extracting the deduction information registered in association therewith, and
processing information transmission means for transmitting to the store terminal sales information on the sales amount and funded pension information on the funded pension amount, which are calculated by the settlement amount processing means, based on the store identification information included in the settlement information received by the settlement information reception means, wherein
the application-allowed person determination means refers to the application information storage means to extract information on the application allowance condition for the funded pension service based on the store identification information included in the settlement information received by the settlement information reception means, and then refers to the user information storage means to determine whether or not the user based on the user identification information included in the settlement information is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information included in the settlement information received by the settlement information reception means and the deduction information extracted by the deduction information extraction means, upon receipt of information from the application-allowed person determination means, indicating that the user is the application-allowed person who satisfies the application allowance condition for the funded pension service,
the processing notification transmission means transmits to the financial institution terminal a reserve processing notification including a reserve processing request to request that a funded pension be reserved for the user, together with the store identification information included in the settlement information received by the settlement information reception means, the user identification information, and the funded pension information on the funded pension amount calculated by the settlement amount processing means, and
the funded pension registration means registers the funded pension information based on the user identification information included in the settlement information received by the settlement information reception means, and
the store terminal receives sales information on the sales amount of the store and funded pension information on the funded pension amount for the user from the funded pension processing device.

17. The funded pension processing system according to claim 10, wherein
the funded pension processing device is further configured to be able to communicate through a network with a user terminal that is used by a user who purchases a product and executes processing for acquisition of settlement information associated with the purchase of the product by the user, and with a store terminal installed in a store selling the product,
the user terminal transmits settlement information to the funded pension processing device, including the user identification information for identifying the user who has purchased the product, the settlement amount information on the purchase of the product by the user, the store identification information for identifying the store that has sold the product, and product identification information for identifying the product, and
the funded pension processing device further includes
deduction information storage means for storing, for each store, deduction information set by the store selling the product to support the user,
settlement information reception means for receiving the settlement information from the user terminal,
deduction information extraction means for referring to the deduction information storage means based on the store identification information and product identification information included in the settlement information received by the settlement information reception means, and extracting the deduction information registered in association therewith, and
processing information transmission means for transmitting to the store terminal sales information on the sales amount and funded pension information on the funded pension amount, which are calculated by the settlement amount processing means, based on the store identification information included in the settlement information received by the settlement information reception means, wherein
the application-allowed person determination means refers to the application information storage means to extract information on the application allowance condition for the funded pension service based on the store identification information included in the settlement information received by the settlement information reception means, and then refers to the user information storage means to determine whether or not the user based on the user identification information included in the settlement information is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the settlement amount processing means calculates the sales amount and the funded pension amount based on the settlement amount information included in the settlement information received by the settlement information reception means and the deduction information extracted by the deduction information extraction means, upon receipt of information from the application-allowed person determination means, indicating that the user is the application-allowed person who satisfies the application allowance condition for the funded pension service,
the processing notification transmission means transmits to the financial institution terminal a reserve processing notification including a reserve processing request to request that a funded pension be reserved for the user, together with the store identification information included in the settlement information received by the settlement information reception means, the user identification information, and the funded pension information on the funded pension amount calculated by the settlement amount processing means, and
the funded pension registration means registers the funded pension information based on the user identification information included in the settlement information received by the settlement information reception means, and
the store terminal receives sales information on the sales amount of the store and funded pension information on the funded pension amount for the user from the funded pension processing device.

18. A method for providing a funded pension service in which, according to a purchase of a product by a user, the user reserves a part of a settlement amount for the product through a store as a funded pension for the user, wherein a funded pension processing device configured to be able to communicate through a network with a human resources information management device having human resources information storage means storing human resources information of the user as a laborer, the device including funded pension information storage means for storing funded pension information on a funded pension amount reserved according to the purchase of the product for each user, user information storage means for storing user identification information for identifying a user to whom the funded pension service is applicable and detailed personal information for each user, and application information storage means for storing information on an application allowance condition for the funded pension service set by the store, executes
first processing of referring to the application information storage means to extract information on the application allowance condition for the funded pension service based on store identification information specified in response to the purchase of the product by the user, and then referring to the user information storage means to determine whether or not the user based on the user identification information specified in response to the purchase of the product by the user is an application-allowed person who satisfies the extracted application allowance condition for the funded pension service,
second processing of transmitting the application allowance condition for the funded pension service, together with the user identification information, to the human resources information management device, and also transmitting an inquiry request to make an inquiry about whether or not the user is the application-allowed person who satisfies the application allowance condition for the funded pension service in light of the human resources information, when no human resources information is registered in the user information storage means upon determination of whether or not the user associated with the purchase of the product is the application-allowed person who satisfies the application allowance condition for the funded pension service in the first processing,
third processing of receiving response information to the inquiry request in the second processing from the human resources information management device,
fourth processing of calculating a sales amount of the store and a funded pension amount for the user, based on settlement amount information calculated according to the purchase of the product and deduction information set by the store selling the product to support the user, upon receipt of the information indicating that the user is the application-allowed person who satisfies the application allowance condition for the funded pension service in the third processing, and
fifth processing of registering the funded pension information on the funded pension amount calculated in the fourth processing in the funded pension information storage means in association with the user identification information for identifying the user who has purchased the product.

19. The funded pension processing method according to claim 18, wherein
the funded pension processing device further executes
processing A1 of acquiring price information of the product in response to the purchase of the product by the user, and calculating a settlement amount,
processing A2 of acquiring deduction information set by the store selling the product to support the user, and
processing A3 of acquiring the user identification information for identifying the user who purchases the product, wherein
the first processing refers to the application information storage means to extract information on the application allowance condition for the funded pension service and then refers to the user information storage means to determine whether or not the user based on the user identification information acquired by the processing A3 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information on the settlement amount calculated by the processing A1 and the deduction information acquired by the processing A2, upon receipt of information from the application-allowed person determination means, indicating that the user is the application-allowed person who satisfies the application allowance condition for the funded pension service, in response to acquisition of payment information, and
the fifth processing registers the funded pension information on the funded pension amount calculated by the fourth processing in the funded pension information storage means based on the user identification information acquired by the processing A3.

20. The funded pension processing method according to claim 18, wherein
the funded pension processing device is further configured to be able to communicate through a network with a store terminal installed in a store selling a product,
the funded pension processing device further executes
processing B1 of receiving settlement information from the store terminal, including the user identification information for identifying the user who has purchased the product, the settlement amount information on the purchase of the product by the user, the store identification information for identifying the store that has sold the product, and the deduction information set by the store selling the product to support the user, and
processing B2 of transmitting to the store terminal sales information on the sales amount and funded pension information on the funded pension amount, which are calculated in the fourth processing, wherein
the first processing refers to the application information storage means to extract information on the application allowance condition for the funded pension service based on the store identification information included in the settlement information received by the processing B1, and then refers to the user information storage means to determine whether or not the user based on the user identification information included in the settlement information received by the processing B1 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information and the deduction information included in the settlement information received by the processing B1, upon receipt of information from the application-allowed person determination means, indicating that the user is the application-allowed person who satisfies the application allowance condition for the funded pension service, and
the fifth processing registers the funded pension information on the funded pension amount calculated by the fourth processing in the funded pension information storage means based on the user identification information included in the settlement information received by the processing B1.

21. The funded pension processing method according to claim 18, wherein
the funded pension processing device is further configured to be able to communicate through a network with a store terminal installed in a store selling a product, and further includes deduction information storage means for storing, for each store, deduction information set by the store selling the product to support the user,
the funded pension processing device further executes
processing C1 of receiving settlement information from the store terminal, including the user identification information for identifying the user who has purchased the product, the settlement amount information on the purchase of the product by the user, and the store identification information for identifying the store that has sold the product,
processing C2 of referring to the deduction information storage means to extract the deduction information based on the store identification information included in the settlement information received by the processing C1, and
processing C3 of transmitting to the store terminal sales information on the sales amount and funded pension information on the funded pension amount, which are calculated in the fourth processing, wherein
the first processing refers to the application information storage means to extract information on the application allowance condition for the funded pension service based on the store identification information included in the settlement information received by the processing C1, and then refers to the user information storage means to determine whether or not the user based on the user identification information included in the settlement information received by the processing C1 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information included in the settlement information received by the processing C1 and the deduction information extracted by the processing C2, upon receipt of information indicating that the user is the application-allowed person who satisfies the application allowance condition for the funded pension service, and
the fifth processing registers the funded pension information on the funded pension amount calculated by the fourth processing in the funded pension information storage means based on the user identification information included in the settlement information received by the processing C1.

22. The funded pension processing method according to claim 18, wherein
the funded pension processing device is further configured to be able to communicate through a network with a store terminal installed in a store selling a product, and further includes deduction information storage means for storing, for each store, deduction information set by the store selling the product to support the user,
the funded pension processing device further executes
processing D1 of receiving settlement information from the store terminal, including the user identification information for identifying the user who has purchased the product, the settlement amount information on the purchase of the product by the user, the store identification information for identifying the store that has sold the product, and product identification information for identifying the product,
processing D2 of referring to the deduction information storage means to extract the deduction information based on the store identification information and product identification information included in the settlement information received by the processing D1, and
processing D3 of transmitting to the store terminal sales information on the sales amount and funded pension information on the funded pension amount, which are calculated in the fourth processing, wherein
the first processing refers to the application information storage means to extract information on the application allowance condition for the funded pension service based on the store identification information included in the settlement information received by the processing D1, and then refers to the user information storage means to determine whether or not the user based on the user identification information included in the settlement information received by the processing D1 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information included in the settlement information received by the processing D1 and the deduction information extracted by the processing D2, upon receipt of information indicating that the user is the application-allowed person who satisfies the application allowance condition for the funded pension service, and
the fifth processing registers the funded pension information on the funded pension amount calculated by the fourth processing in the funded pension information storage means based on the user identification information included in the settlement information received by the processing D1.

23. The funded pension processing method according to claim 18 for providing a cloud computing service, wherein
the funded pension processing device is further configured to be able to communicate through a network with a store terminal installed in a store selling a product, and further includes deduction information storage means for storing, for each store, product identification information and deduction information set by the store selling the product to support the user in association with each other, and store information storage means for storing, for each store, product identification information for identifying a product, price information of the product, and information indicating whether or not the deduction information is set, in association with each other,
the funded pension processing device further executes
processing E1 of acquiring through the store terminal store identification information for identifying the store that has sold the product and product identification information for identifying the product, in response to the purchase of the product by the user, and specifying price information based on the store identification information and the product identification information to calculate the settlement amount and check if the deduction information is set for the product,
processing E2 of specifying, when it is confirmed that the deduction information is set, deduction information based on the store identification information and the product identification information by referring to the deduction information storage means, and
processing E3 of acquiring through the store terminal the user identification information for identifying the user who purchases the product, wherein
the first processing refers to the application information storage means to extract information on the application allowance condition for the funded pension service, and then refers to the user information storage means to determine whether or not the user based on the user identification information acquired by the processing E3 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information on the settlement amount calculated by the processing E1 and the deduction information specified by the processing E2, upon receipt of information indicating that the user is the application-allowed person who satisfies the application allowance condition for the funded pension service, in response to acquisition of payment information through the store terminal, and
the fifth processing registers the funded pension information on the funded pension amount calculated by the fourth processing in the funded pension information storage means based on the user identification information acquired by the processing E3.

24. The funded pension processing method according to claim 18, wherein
the funded pension processing device is further configured to be able to communicate through a network with a user terminal used by a user who purchases a product, and further includes deduction information storage means for storing, for each store, deduction information set by the store selling the product to support the user,
the funded pension processing device further executes
processing F1 of receiving settlement information from the user terminal, including the user identification information for identifying the user who has purchased the product, the settlement amount information on the purchase of the product by the user, and the store identification information for identifying the store that has sold the product,
processing F2 of referring to the deduction information storage means to extract the deduction information based on the store identification information included in the settlement information received by the processing F1, and
processing F3 of transmitting to the store terminal sales information on the sales amount and funded pension information on the funded pension amount, which are calculated in the fourth processing, based on the store identification information, wherein
the first processing refers to the application information storage means to extract information on the application allowance condition for the funded pension service based on the store identification information included in the settlement information received by the processing F1, and then refers to the user information storage means to determine whether or not the user based on the user identification information included in the settlement information received by the processing F1 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount and the funded pension amount based on the settlement amount information included in the settlement information received by the processing F1 and the deduction information extracted by the processing F2, upon receipt of information indicating that the user is the application-allowed person who satisfies the application allowance condition for the funded pension service, and
the fifth processing registers the funded pension information on the funded pension amount calculated by the fourth processing in the funded pension information storage means based on the user identification information included in the settlement information received by the processing F1.

25. The funded pension processing method according to claim 18, wherein
the funded pension processing device is further configured to be able to communicate through a network with a user terminal used by a user who purchases a product, and further includes deduction information storage means for storing, for each store, deduction information set by the store selling the product to support the user,
the funded pension processing device further executes
processing G1 of receiving settlement information from the user terminal, including the user identification information for identifying the user who has purchased the product, the settlement amount information on the purchase of the product by the user, the store identification information for identifying the store that has sold the product, and product identification information for identifying the product,
processing G2 of referring to the deduction information storage means to extract the deduction information based on the store identification information and the product identification information included in the settlement information received by the processing G1, and
processing G3 of transmitting to the store terminal sales information on the sales amount and funded pension information on the funded pension amount, which are calculated in the fourth processing, based on the store identification information, wherein
the first processing refers to the application information storage means to extract information on the application allowance condition for the funded pension service based on the store identification information included in the settlement information received by the processing G1, and then refers to the user information storage means to determine whether or not the user based on the user identification information included in the settlement information received by the processing G1 is an application-allowed person who satisfies the extracted application allowance condition for the funded pension service or to determine whether or not the user associated with the purchase of the product is the application-allowed person who satisfies the application allowance condition for the funded pension service, based on response information received by response information reception means when the human resources information on the extracted application allowance condition for the funded pension service is not registered in the user information storage means,
the fourth processing calculates the sales amount of the store and the funded pension amount for the user based on the settlement amount information included in the settlement information received by the processing G1 and the deduction information extracted by the processing G2, upon receipt of information indicating that the user is the application-allowed person who satisfies the application allowance condition for the funded pension service, and
the fifth processing registers the funded pension information on the funded pension amount calculated by the fourth processing in the funded pension information storage means based on the user identification information included in the settlement information received by the processing G1.

26. A funded pension processing program causing a computer to function as the funded pension processing device according to any one of claims 2 to 9.
